# EUROPEAN PATENT APPLICATION

(11) **EP 4 851 873 A1**
(43) Date of publication of application: **09.12.2026**
(21) Application number: 24921209.3
(22) Date of filing: 10.05.2024
(51) Int. Cl.: G06N 20/00

(54) **DEVICE, METHOD AND SYSTEM FOR MACHINE LEARNING**

(30) Priority: 31.01.2024 CN 202410141992
(71) Applicant: Sony Group Corporation, Tokyo 108-0075 (JP)
(72) Inventor: SUN, Chen, Beijing 100027 (CN); WANG, Xiaoxue, Beijing 100027 (CN); CHEN, Wei, Beijing 100084 (CN); HUANG, Lei, Beijing 100084 (CN); ZHANG, Wenqi, Beijing 100027 (CN)
(74) Representative: D Young & Co LLP
(86) International application number: PCT/CN2024/092251
(87) International publication number: WO 2025/161166

(57) **Abstract**

Disclosed are devices, methods, and systems for machine learning. An exemplary method comprises: obtaining a local distribution parameter set of a second device, the local distribution parameter set characterizing data distribution characteristics of a local dataset of the second device; and sending a trained particular model to the second device, wherein the particular model is determined based at least in part on the local distribution parameter set.

## Description

### CLAIM OF PRIORITY

This application claims the priority to Chinese patent application with application number 202410141992.3, titled "DEVICE, METHOD, AND SYSTEM FOR MACHINE LEARNING", filed on January 31, 2024, the entire content of which is incorporated herein by reference.

### TECHNICAL FIELD

The present disclosure relates to a field of communication, and in particular, to devices, methods and systems for machine learning.

### BACKGROUND

The application of Artificial Intelligence (AI) technology is becoming increasingly widely widespread. Artificial Intelligence models may be trained through machine learning. For training and use of artificial intelligence models, there is a desire for improved devices, methods, and systems.

### SUMMARY

The present disclosure provides devices, methods and systems for machine learning.

One aspect of the present disclosure relates to an electronic device, comprising: at least one processing unit; and at least one storage unit comprising computer program code, which, when executed by the at least one processing unit, causes the electronic device to perform operations of: obtaining a local distribution parameter set of a second device, the local distribution parameter set characterizing data distribution characteristics of a local dataset of the second device; and sending a trained particular model to the second device, wherein the particular model is determined based at least in part on the local distribution parameter set.

Another aspect of the present disclosure relates to an electronic device, comprising: at least one processing unit; and at least one storage unit comprising computer program code, wherein the computer program code, when executed by the at least one processing unit, causes the electronic device to perform operations of: sending a local distribution parameter set to a first device, the local distribution parameter set characterizing data distribution characteristics of a local dataset of the electronic device; and receiving a trained particular model from the first device, wherein the particular model is determined based at least in part on the local distribution parameter set.

Another aspect of the present disclosure relates to an electronic device, comprising: at least one processing unit; and at least one storage unit comprising computer program code, wherein the computer program code, when executed by the at least one processing unit, causes the electronic device to perform operations of: receiving one or more local distribution parameter sets, each of which characterizing data distribution characteristics of a local dataset of a respective client of one or more clients; sending, to a model repository, a task identifier that identifies a training task associated with the one or more clients; receiving, from the model repository, one or more trained candidate models corresponding to the task identifier; and sending a model list comprising a respective matching model selected from the one or more candidate models for each of the one or more clients, the matching model being determined based at least in part on a respective local distribution parameter set in the one or more local distribution parameter sets.

Another aspect of the present disclosure relates to a computer-readable storage medium having one or more instructions stored thereon, which, when executed by one or more processing circuits of an electronic device, cause the electronic device to perform any method as described in the present disclosure.

Another aspect of the present disclosure relates to a computer program product comprising a computer program, which, when executed by a processor, implements any method as described in the present disclosure.

Another aspect of the present disclosure relates to an apparatus comprising means for performing any method as described in the present disclosure.

### BRIEF DESCRIPTION OF THE DRAWINGS

The above and other purposes and advantages of the present disclosure will be further described below in conjunction with specific embodiments and with reference to the accompanying drawings. In the drawings, same or corresponding technical features or components will be denoted by the same or corresponding reference numerals.
FIG. 1 illustrates a schematic diagram of an exemplary system for federated learning according to some embodiments of the present disclosure.
FIG. 2 illustrates an exemplary block diagram of an electronic device according to some embodiments of the present disclosure.
FIG. 3 illustrates an exemplary block diagram of an electronic device according to some embodiments of the present disclosure.
FIG. 4 illustrates an exemplary block diagram of an electronic device according to some embodiments of the present disclosure.
FIG. 5 illustrates a flowchart of a method according to some embodiments of the present disclosure.
FIG. 6 illustrates a flowchart of a method according to some embodiments of the present disclosure.
FIG. 7 illustrates a flowchart of a method according to some embodiments of the present disclosure.
FIG. 8 illustrates a schematic diagram of a process according to some embodiments of the present disclosure.
FIG. 8A illustrates a schematic diagram of a process according to some embodiments of the present disclosure.
FIG. 9 illustrates a correspondence relationship between a local dataset and a local distribution parameter set according to some embodiments of the present disclosure.
FIG. 10A illustrates an exemplary process of calculating a similarity between a local dataset and a training dataset according to some embodiments of the present disclosure.
FIG. 10B illustrates an example of calculating a feature distance between two samples of a local dataset and a training dataset according to some embodiments of the present disclosure.
FIG. 11 is a block diagram showing a first example of an exemplary configuration of a gNB to which the technology of the present disclosure may be applied.
FIG. 12 is a block diagram showing a second example of an exemplary configuration of a gNB to which the technology of the present disclosure may be applied.
FIG. 13 is a block diagram showing an example of an exemplary configuration of a communication device to which the technology of the present disclosure may be applied.
FIG. 14 is a block diagram showing an example of an exemplary configuration of a vehicle navigation device to which the technology of the present disclosure may be applied.

While the embodiments described in the present disclosure may be susceptible to various modifications and alternative forms, specific embodiments thereof are shown by way of example in the drawings and described in detail in the present disclosure. It should be understood that the drawings and detailed description are not intended to limit the embodiments to the disclosed particular forms, but on the contrary, the intention is to cover all modifications, equivalents and alternatives that fall within the spirit and scope of the claims.

### DETAILED DESCRIPTION

Exemplary embodiments of the present disclosure will be described below with reference to the accompanying drawings. For the sake of clarity and conciseness, not all features of the embodiments are described in the specification. It should be understood, however, that many implementation-specific settings must be made in implementing an embodiment in order to achieve the developer's specific goals, for example, to meet those constraints associated with the device and business, and that these constraints may vary from one implementation to another. Moreover, it should also be understood that development work, while potentially very complex and time-consuming, would only be a routine undertaking for those skilled in the art having the benefit of the present disclosure.

Here, it should also be noted that in order to avoid obscuring the present disclosure with unnecessary details, only the processing steps and/or device structures that are closely related to at least the solution according to the present disclosure are shown in the drawings, while other details that are of little relevance to the present disclosure are omitted.

The application of artificial intelligence technology is becoming increasingly widespread. Artificial intelligence models may be trained through machine learning. Generally, machine learning is performed iteratively based on a training dataset. A complete training dataset generally includes an input data portion and an output data portion, in which the input data portion may represent raw data, while the output data portion may include labels, predictions, or decisions, etc., corresponding to the raw data. For example, in an example of training a classification model, the output data portion may be classification labels corresponding to the raw data. For another example, in an example of training a prediction model, the output data portion may be prediction results corresponding to the raw data. For yet another example, in an example of training a decision model, the output data portion may be decision results corresponding to the raw data. By providing the training dataset including both of the input data portion and the output data portion to a model being trained, the behavior and performance of the model may be iteratively corrected, thereby obtaining a trained model. The trained model may be used to generate new labels, predictions, or decisions based on new input data.

A dataset including an input data portion and a complete output data portion may be referred to as a labeled dataset. A dataset including an input data portion but lacking a complete output data portion may be referred to as an unlabeled dataset or a partially unlabeled dataset. Using an unlabeled dataset or a partially unlabeled dataset as a training dataset to train a model leads to insufficient model training, thereby reducing the performance of the trained model.

The inventors of the present disclosure discovered that the training dataset held by a model trainer is not always complete. Obtaining a corresponding output data portion based on an input data portion of a dataset usually requires sufficient professional knowledge and experience (such as image labeling experts, etc.) and sufficient processing time, and accordingly incurs costs. In some cases, constrained by knowledge, time, or cost, it is difficult for the model trainer to obtain a complete output data portion. This challenge is particularly prominent in a Federated Learning (FL) process described below. According to the technology of the present disclosure, an output data portion corresponding to an input data portion may be complemented, thereby forming a complete training dataset. This data complementation process may be automatic, fast, accurate, and/or low-cost.

In addition, the inventors of the present disclosure discovered that an input data portion in a training dataset may depend on a specific scenario. For example, a training image set associated with a first scenario may have different features from a training image set associated with a second scenario, leading to differences between models that are trained based on these two image sets. When applying a trained model to a new local image set, it is advantageous to find a trained model that best matches the local images.

### 1. Exemplary System

This section describes an exemplary system for federated learning. Federated learning is a distributed learning technology. In a system adopting federated learning, each of a plurality of training devices uses its local dataset as a training dataset to individually perform training of a respective local model. Each training device may upload the trained respective local model to a server. The server aggregates a plurality of local models received from the plurality of training devices to obtain a global model.

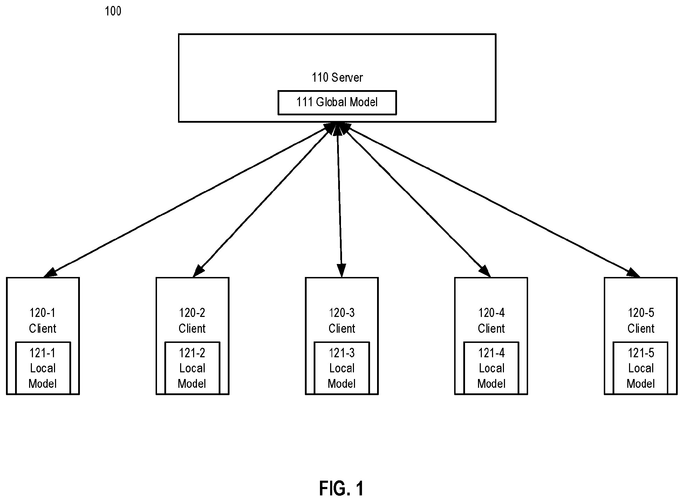

FIG. 1 illustrates a schematic diagram of an exemplary system 100 for federated learning according to some embodiments of the present disclosure. The system 100 may include a server 110. The server 110 may act as a server for federated learning. The system 100 may further include a plurality of clients 120-1 to 120-5. The plurality of clients may be collectively represented with 120. Each client 120 may be communicatively coupled with the server 110. Each client 120 may act as a training device for federated learning.

During federated learning, the training of an artificial intelligence model may be an iterative process including multiple training rounds. In one training round, each client 120 may use a local dataset of the client as a training dataset to perform training, thereby obtaining a respective trained local model 121. Local datasets of different clients 120 may be different, so the obtained local models 121 may be different. For example, clients 120-1, 120-2, 120-3, 120-4, and 120-5 may respectively obtain trained local models 121-1, 121-2, 121-3, 121-4, and 121-5. Each client 120 may upload the trained local model 121 to the server 110. The server 110 may aggregate the plurality of local models 121 received from individual clients 120 to generate a global model 111. Then, the global model 111 may be distributed to each client 120 via a downlink between the server 110 and each client 120. Based on the received global model 111, each client 120 may update the local model 121 of the client.

In the next training round, each client 120 may continue to train the updated local model 121 of the client, thereby obtaining a trained local model 121. Once again, each client 120 may upload the trained local model 121 obtained in the current training round to the server 110. The server 110 may aggregate the plurality of local models 121 received from individual clients 120 to generate the global model 111. The global model 111 may be distributed to individual clients 120 again for subsequent training rounds. This process may be repeated until an ending condition is met. The performance of the global model 111 may be improved by iteratively going through multiple training rounds.

In the process of federated learning, each client uploads the local model without having to exchange the local training dataset with the server or other training devices. Therefore, federated learning may utilize training capabilities and training datasets of a large number of clients to train the artificial intelligence model while safeguarding data security and user privacy. This helps improve training efficiency and improve the performance of the obtained artificial intelligence model.

In order to improve training efficiency of federated learning and generalization capability of the trained model, it is desirable for as many clients as possible to participate in the federated learning process. However, it is difficult to require all clients participating in the federated learning process to have sufficient experience, knowledge, processing power, or budget to obtain a complete training dataset (specifically, a complete output data portion of a local dataset of the client) in a conventional manner (e.g., equipped with labeling experts with specialized knowledge). Therefore, the local dataset of one or more of these clients may not be a complete training dataset because some input data portions of the local dataset do not have corresponding output data portions. When using a local dataset missing an output data portion as the training dataset, training of the local model by a client may be insufficient, and the resulting global model is also not desirable.

On the other hand, an input data portion held by a client may vary depending on scenarios. An input data portion obtained in a first scenario may not be accurately processed to generate an accurate output data portion based on inherent professional knowledge and experience (e.g., labeling experts trained based on a second scenario). If the client uses some fixed mechanism to obtain the output data portion, the output data portion given by the fixed mechanism for a changing input data portion in a changing scenario may lack accuracy (e.g., labeling accuracy). Furthermore, if a single mechanism is applied to all clients participating in the federated learning process, it may not be able to accurately adapt to the input data portion of each client in the respective scenario. The obtained output data portion may be inaccurate. When using a local dataset with an inaccurate output data portion as the training dataset, training of the local model by a client may be inaccurate, and the resulting global model is also not desirable.

It should be understood that the federated learning process described in conjunction with FIG. 1 is merely an example of a machine learning process facing one or more technical problems. Similar technical problems may exist in other machine learning processes. Therefore, the technology as described in the present disclosure is not limited to the federated learning process. For example, during us of the model (rather than model training), a model user also faces the problem of selecting a matching model for a local dataset under a particular scenario. In addition, there exists one or more other technical problems

### 2. Exemplary Devices

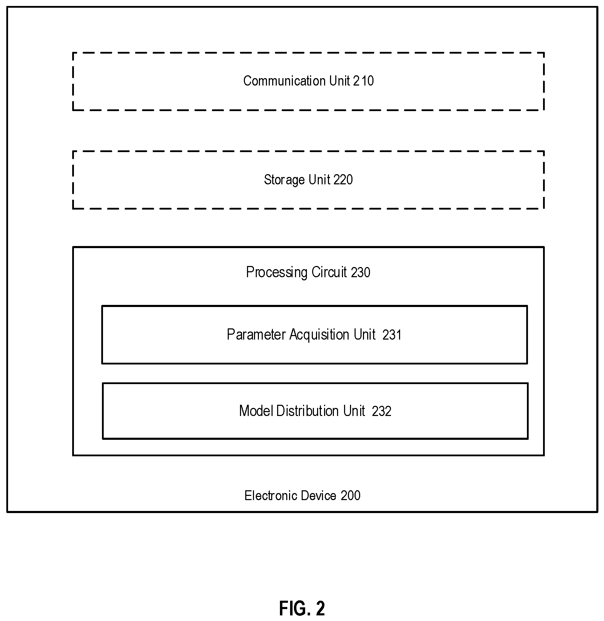

FIG. 2 illustrates an exemplary block diagram of an electronic device 200 according to some embodiments of the present disclosure. In some embodiments, the electronic device 200 may be implemented on a server side. Therefore, the electronic device 200 may be referred to as a server or a server device. For example, in the system 100 described in FIG. 1, the electronic device 200 may be implemented at the server 110. The electronic device 200 may be implemented as the server itself, as a part of the server, or as a control device for controlling the server. For example, the electronic device 200 may be implemented as a chip for controlling the server. In some embodiments of the present disclosure, the electronic device 200 is implemented as the server itself, which is merely for convenience of description and is not intended to be limiting. In other embodiments, the electronic device 200 may be alternatively implemented as a device other than the server.

According to some embodiments of the present disclosure, the electronic device 200 may include a communication unit 210, a storage unit 220, and a processing circuit 230.

The communication unit 210 of the electronic device 200 may be used to receive or send wired transmissions or radio transmissions. The communication unit 210 may perform functions such as up-conversion, digital-to-analog conversion on a signal that is to be sent, and/or perform functions such as downconversion, analog-to-digital conversion on a signal that is received. The communication unit 210 may be implemented using various technologies. For example, the communication unit 210 may be implemented as a communication interface component, such as an antenna device, a radio frequency circuit, and a part of a baseband processing circuit. The communication unit 210 is drawn with dashed lines, as it may be alternatively located within the processing circuit 230 or external to the electronic device 200.

The storage unit 220 of the electronic device 200 may store information generated by the processing circuit 230, information received from or to be sent to other devices through the communication unit 210, programs, machine codes, and data used for operations of the electronic device 200, and the like. The storage unit 220 may be a volatile memory and/or a non-volatile memory. For example, the storage unit 220 may include, but is not limited to, a random access memory (RAM), a dynamic random access memory (DRAM), a static random access memory (SRAM), a read-only memory (ROM) and a flash memory. The storage unit 220 is drawn with dashed lines, as it may be alternatively located within the processing circuit 230 or external to the electronic device 200.

The processing circuit 230 of the electronic device 200 may be configured to perform one or more operations, thereby providing various functions of the electronic device 200. Functions of elements disclosed herein may be implemented using a circuit or the processing circuit 230, which includes a general-purpose processor, a special-purpose processor, an integrated circuit, an Application Specific Integrated Circuit (ASIC), a conventional circuit, and/or combinations thereof, configured or programmed to perform the disclosed functions. Processors are considered processing circuits or circuits because they include transistors and other circuits therein. In the present disclosure, a circuit, a unit, or an apparatus is a hardware that performs or is programmed to perform the stated functions. The hardware may be any hardware disclosed herein or otherwise known that is programmed or configured to perform the stated functions. When the hardware is a processor that may be considered a type of circuit, the circuit, the apparatus, or the unit is a combination of hardware and software, where the software is used to configure the hardware and/or the processor. According to some embodiments, in response to the processing circuit 230 executing computer program codes contained in the storage unit 220, the electronic device 200 may be configured to perform one or more steps that are performed by the server device in the present disclosure.

According to some embodiments, the electronic device 200 may be configured to obtain a local distribution parameter set of a second device, the local distribution parameter set characterizing data distribution characteristics of a local dataset of the second device. The second device may be another electronic device different from the electronic device 200. For example, when the electronic device 200 is implemented as a server for machine learning, the second device may be a client associated with the machine learning. In some embodiments, the client may be a user of a model associated with the machine learning. In other embodiments, the client may be a trainer of the model associated with the machine learning. For example, the client may be a training device associated with federated learning.

According to some embodiments, the electronic device 200 may be further configured to send a trained particular model to the second device, the particular model being determined based at least in part on the local distribution parameter set.

A distribution parameter set may characterize data distribution characteristics of a dataset. The inventors of the present disclosure discovered that different distribution parameter sets may be used to distinguish different datasets (e.g., input data portions obtained under different scenarios). By selecting the particular model based on the local distribution parameter set of the local dataset of the second device, the selected particular model may match the local dataset of the second device. Such a particular model may be referred to as a matching model. By applying the matching particular model to the local dataset of the second device, results output by the model have high accuracy. In addition, by transmitting the local distribution parameter set instead of the local dataset itself, the communication burden between electronic devices may be advantageously saved, as the local dataset usually contains a large amount of data. Additionally, avoiding transmission of the local dataset may maintain data security and user privacy.

In some embodiments, the processing circuit 230 may include a parameter acquisition unit 231 and a model distribution unit 232, which may each include respective hardware circuits or software modules. The parameter acquisition unit 231 may be configured to perform the step of obtaining the local distribution parameter set. The model distribution unit 232 may be configured to perform the step of sending the particular model. According to some embodiments of the present disclosure, the electronic device 200 may be further configured to perform one or more additional steps that are performed by the server device, as described in further detail below. Accordingly, the processing circuit 230 may include one or more additional units (not shown) for performing the one or more additional steps.

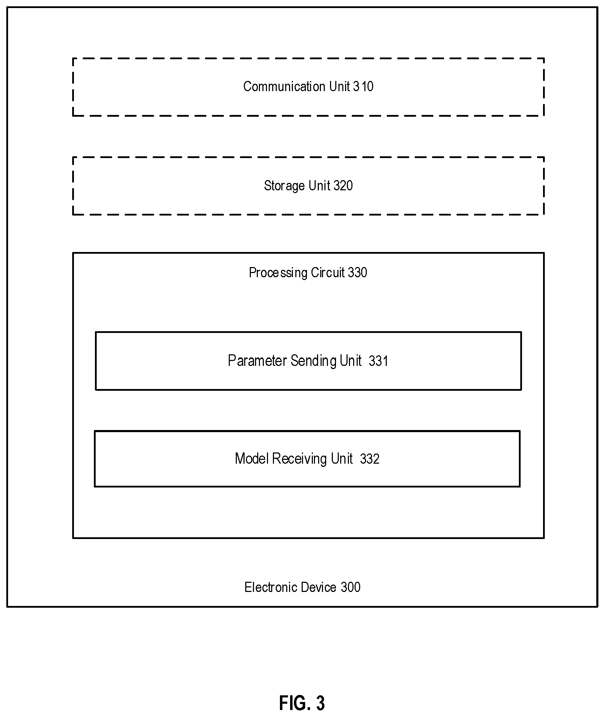

FIG. 3 illustrates an exemplary block diagram of an electronic device 300 according to some embodiments of the present disclosure. In some embodiments, the electronic device 300 may be implemented on a client side. Therefore, the electronic device 300 may be referred to as a client or a client device. For example, in the system 100 described in FIG. 1, the electronic device 300 may be implemented at the client 120. The electronic device 300 may be implemented as the client itself, as a part of the client, or as a control device for controlling the client. For example, the electronic device 300 may be implemented as a chip for controlling the client. In some embodiments of the present disclosure, the electronic device 300 is implemented as the client itself, which is merely for convenience of description and is not intended to be limiting. In other embodiments, the electronic device 300 may be alternatively implemented as a device other than the client.

According to some embodiments of the present disclosure, the electronic device 300 may include a communication unit 310, a storage unit 320, and a processing circuit 330. Specific implementations of the communication unit 310, the storage unit 320, and the processing circuit 330 may be similar to the communication unit 210, the storage unit 220, and the processing circuit 230 described above with respect to the electronic device 200, which will not be repeated here. According to some embodiments, in response to the processing circuit 330 executing computer program code contained in the storage unit 320, the electronic device 300 may be configured to perform one or more steps that are performed by a client device in implementing various methods according to some embodiments of the present disclosure.

According to some embodiments, the electronic device 300 may be configured to send a local distribution parameter set to a first device. The local distribution parameter set may characterize data distribution characteristics of a local dataset of the electronic device 300. The first device may be another electronic device different from the electronic device 300. In some embodiments, when the electronic device 300 is implemented as a client associated with machine learning, the first device may include a server for the machine learning. The first device may be implemented by the electronic device 200. In other embodiments, the first device may alternatively include a device other than the server for machine learning.

According to some embodiments, the electronic device 300 may be further configured to receive a trained particular model from the first device, the particular model being determined based at least in part on the local distribution parameter set of the local dataset of the electronic device 300.

In some embodiments, the processing circuit 330 may include a parameter sending unit 331 and a model receiving unit 332, which may each include respective hardware circuits or software modules. The parameter sending unit 331 may be configured to perform the step of sending the local distribution parameter set. The model receiving unit 332 may be configured to perform the step of receiving the trained particular model. According to some embodiments of the present disclosure, the electronic device 300 may be further configured to perform one or more additional steps that are performed by the server device, as described in further detail below. Accordingly, the processing circuit 330 may include one or more additional units (not shown) for performing the one or more additional steps.

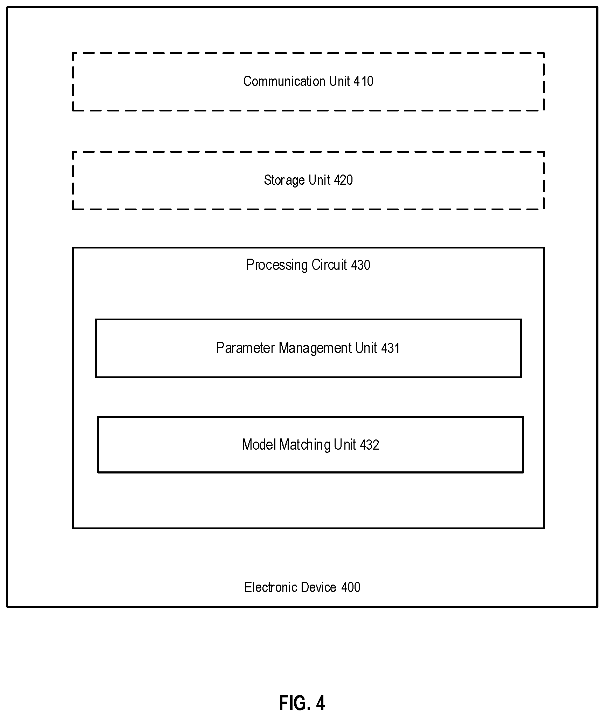

FIG. 4 illustrates an exemplary block diagram of an electronic device 400 according to some embodiments of the present disclosure. The electronic device 400 may be configured to operate cooperatively with other electronic devices (e.g., the electronic device 200), thereby implementing the technology described in the present disclosure. In some embodiments, the electronic device 400 may be implemented at a network element device in a cellular network, thereby enabling the technology described in the present disclosure to be performed in the environment of a cellular network. As one specific example, the electronic device 400 may be implemented at a Network Data Analytics Function (NWDAF). In other embodiments, the electronic device 400 may be implemented at other devices of other types of networks without limitation.

According to some embodiments of the present disclosure, the electronic device 400 may include a communication unit 410, a storage unit 420, and a processing circuit 430. Specific implementations of the communication unit 410, the storage unit 420, and the processing circuit 430 may be similar to the communication unit 210, the storage unit 220, and the processing circuit 230 described above with respect to the electronic device 200, which will not be repeated here. According to some embodiments, in response to the processing circuit 430 executing computer program code contained in the storage unit 420, the electronic device 400 may be configured to perform one or more steps implementing various methods according to some embodiments of the present disclosure.

According to some embodiments, the electronic device 400 may be configured to receive one or more local distribution parameter sets. Each local distribution parameter set in the one or more local distribution parameter sets may characterize data distribution characteristics of a local dataset of a respective client of one or more clients.

According to some embodiments, the electronic device 400 may be further configured to send a task identifier to a model repository. The task identifier may identify a training task associated with the one or more clients.

According to some embodiments, the electronic device 400 may be further configured to receive, from the model repository, one or more trained candidate models corresponding to the task identifier.

According to some embodiments, the electronic device 400 may be further configured to send a model list. The model list may include a respective matching model that is selected from the one or more candidate models for each of the one or more clients, the matching model being determined based at least in part on a respective local distribution parameter set in the one or more local distribution parameter sets.

In some embodiments, the processing circuit 430 may include a parameter management unit 431 and a model matching unit 432, which may each include respective hardware circuits or software modules. The parameter management unit 431 may be configured to perform the step of obtaining the one or more local distribution parameter sets. The model matching unit 432 may be configured to perform steps of sending the task identifier, receiving the candidate models, and sending the model list. In some embodiments, the model matching unit 432 may include sub-units (not shown) for performing each of these steps.

According to some embodiments of the present disclosure, the electronic device 400 may be further configured to perform one or more additional steps, as described in further detail below with respect to the NWDAF. Accordingly, the processing circuit 430 may include one or more additional units (not shown) for performing the one or more additional steps.

### 3. Exemplary Methods

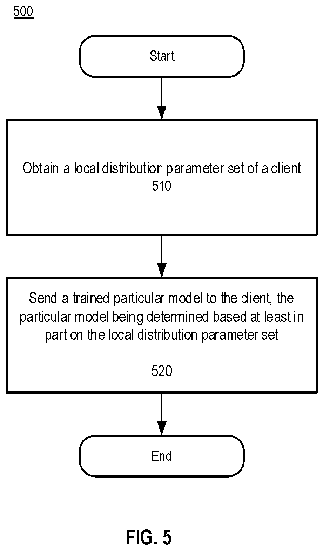

FIG. 5 illustrates a flowchart of a method 500 according to some embodiments of the present disclosure. According to some embodiments, the method 500 may be performed at a server for machine learning. For example, the method 500 may be performed by the server 110. The server 110 may be implemented by the above electronic device 200. Accordingly, the method 500 may be performed by the processing circuit 230 of the electronic device 200.

The method 500 may begin with step 510. In step 510, the server may be configured to obtain a local distribution parameter set of a client. The local distribution parameter set characterizes data distribution characteristics of a local dataset of the client.

In some embodiments, the server may be configured to receive the local distribution parameter set directly from the client. In other embodiments, the server may be configured to receive the local distribution parameter set from another device (e.g., an intermediate device between the server and the client) associated with the client. In some embodiments, if a certain degree of loss of data security and user privacy may be tolerated, the server may receive the local dataset (or a part of samples of the local dataset) from the client and calculate the local distribution parameter set.

The obtained local distribution parameter set may include one or more distribution parameters. The quantity and type of the one or more distribution parameters may vary depending on the local dataset. As an example, the local dataset may follow a Gaussian distribution, a Gamma distribution, a Log-normal distribution, or any other type of distribution. Accordingly, the local distribution parameter set may include distribution parameters corresponding to these distribution types. Optionally, the local distribution parameter set may additionally include a type indicator indicating the distribution type.

The method 500 may continue to step 520. In step 520, the server may be configured to send a trained particular model to the client, the particular model being determined based at least in part on the local distribution parameter set.

In the present disclosure, a trained model refers to a model that has completed a training process based on a training dataset. The trained model may be used to generate an output data portion (e.g., a label, a prediction, a decision, etc.) based on an input data portion. Therefore, the trained particular model may be applied by a client device to at least a portion of its local dataset to generate an output data portion that corresponds to the at least a portion of its local dataset.

According to some embodiments of the present disclosure, the particular model determined for the client may be selected from one or more candidate models. Among one or more training datasets used for training the one or more candidate models, a particular training dataset used for training the particular model may have the highest similarity with the local dataset of the client. Selecting the particular model based on the similarity between the training dataset and the local dataset may enable the selected particular model to adapt to the local dataset of the client. Accordingly, compared with other models in the one or more candidate models, the output data portion generated by the particular model based on the local dataset will be more accurate.

According to some embodiments of the present disclosure, the similarity between the local dataset and the particular training dataset may be determined based at least in part on: (1) the local distribution parameter set of the local dataset, and (2) a particular distribution parameter set of the particular training dataset. An example calculation process for determining the similarity between the two datasets based on the two distribution parameter sets will be further described below.

In some embodiments, the server may be configured to implement a model provider, while the client may be configured as a model user. In this case, the particular model determined in step 520 may be applied by the client to the local dataset of the client to generate an output data portion. The client may use the output data portion to perform one or more actions.

For example, the client may be an access control device using face recognition, the server is maintained by a face recognition service provider, and the particular model is a particular face recognition model provided by the face recognition service provider. The access control device may apply the particular face recognition model to a captured user image, and determine whether to allow the user to enter based on an output result of the face recognition model. When the same access control device is deployed in different scenarios (e.g., in different regions, times, lighting conditions, or shooting angles), the resulting local datasets (e.g., pixel data in a user image set) may have different data distribution characteristics. Through the method 500, the face recognition service provider may provide the access control device with a particular face recognition model that best matches the local dataset in the current scenario, as the particular face recognition model was trained using a training dataset having similar data distribution characteristics. In this way, the accuracy of the access control device in the current scenario may be improved.

It should be understood that face recognition is merely one use case of the model described in the present disclosure. The technology described in the present disclosure is not limited to this specific use case.

In other embodiments, the client may be configured to implement a model trainer. For example, the server may be configured as a server implementing a federated learning process, while the client is configured as one of a plurality of clients implementing the federated learning process. In this case, the server may be configured to receive a trained local model from the client. The local model was trained by the client based on a complemented local dataset. The complemented local dataset includes a supplemented output data portion. The supplemented output data portion is generated by the particular model based on at least a portion of the local dataset of the client.

Specifically, the client may provide the at least a portion (e.g., the at least a portion that lacks a corresponding output data portion) of the local dataset as input data to the particular model to generate the supplemented output data portion. The output data portion may be used to complement the local dataset of the client. The complemented local dataset may form a complete training dataset for use in training the local model of the client.

The server may be further configured to generate a global model based at least in part on aggregation of the local model received from the client. For example, the server may aggregate the local model with trained local models from other clients that participate in the federated learning, as described with respect to FIG. 1. The trained local models from other clients may be trained based on local datasets of the other clients. The local datasets of the other clients may or may not be complemented local datasets.

According to some embodiments of the present disclosure, one or more trained candidate models from which the particular model is selected may be maintained in a model repository. The model repository may also maintain one or more training datasets corresponding to the one or more candidate models. The model repository may reside at another device (e.g., an Analytics Data Repository Function (ADRF) in a cellular network) different from the server. In this case, the server may further be configured to send the local distribution parameter set obtained in step 510 together with a client identifier of the client. Then, the server may receive the model list, which may include the particular model selected for the client.

In some embodiments, the local distribution parameter set together with the client identifier may be sent to a remote device (e.g., the electronic device 400) that communicates with the model repository. Then, the server may receive the model list from the remote device. In some embodiments, the model list may include one or more matching models determined for one or more clients. The server may be configured to identify, from the model list and based on the client identifier of each client, a matching model (e.g., the particular model described above) to be sent to the client. Then, the identified matching models may be sent to the respective clients, as described in step 520.

According to some embodiments of the present disclosure, the server may additionally be configured to send the local distribution parameter set obtained in step 510 together with a task identifier. The task identifier may be used to identify a particular training task of the client in the federated learning process. The particular training task may correspond to a particular service that is provided by the client to a user. Then, the server may be configured to receive the particular model, the particular model being determined based at least in part on the task identifier.

In some embodiments, the local distribution parameter set and the task identifier may be sent by the server to a remote device (e.g., the electronic device 400) that communicates with the model repository. Then, the server may receive, from the remote device, the particular model associated with the client. For example, the remote device may obtain, from the model repository, one or more candidate models corresponding to the task identifier. The remote device may select, from the one or more candidate models, the particular model that matches the client.

In an embodiment of federated learning, each task identifier may be used to identify a particular training task for a group of clients in the federated learning process. For example, a first group of clients may be configured to perform a first training task (e.g., training a face recognition model based on local image sets) and be associated with a first task identifier, while a second group of clients may be configured to perform a second training task (e.g., training a channel prediction model based on local signal datasets) and be associated with a second task identifier. Each client may be associated with a task identifier. The server may identify different tasks for different clients, and send a respective task identifier together with a distribution parameter set associated with the client to a remote device, thereby obtaining a matching model corresponding to the training task. For example, the server may obtain a set of trained face recognition models for the first group of clients. Each model in the set of face recognition models is distributed by the server to a respective matching client in the first group of clients to complement the local image set of that client. The server may obtain a set of trained channel prediction models for the second group of clients. Each model in the set of channel prediction models is distributed by the server to a respective matching client in the second group of clients to complement the local signal dataset of that client. It should be understood that the above two tasks are merely exemplary, and the technology of the present disclosure is not limited thereto.

According to some embodiments, the technology of the present disclosure may be performed in a cellular network. By way of example and not limitation, the server may be deployed with an Application Function (AF) of a cellular network. The remote device may implement a Network Data Analytics Function (NWDAF) of the cellular network. The model repository may reside at an Analytics Data Repository Function (ADRF) of the cellular network. In this case, if the AF deployed at the server is untrusted, the server may send the local distribution parameter set (together with the optional task identifier or client identifier) to a Network Exposure Function (NEF) of the cellular network. The NEF may forward these information to the NWDAF. Accordingly, the NWDAF may return the model list containing the particular model to the server via the NEF. If the AF deployed at the server is trusted, the server may send the local distribution parameter set (together with the optional task identifier or client identifier) directly to the NWDAF. Accordingly, the NWDAF may return the model list containing the particular model directly to the server without passing through the NEF.

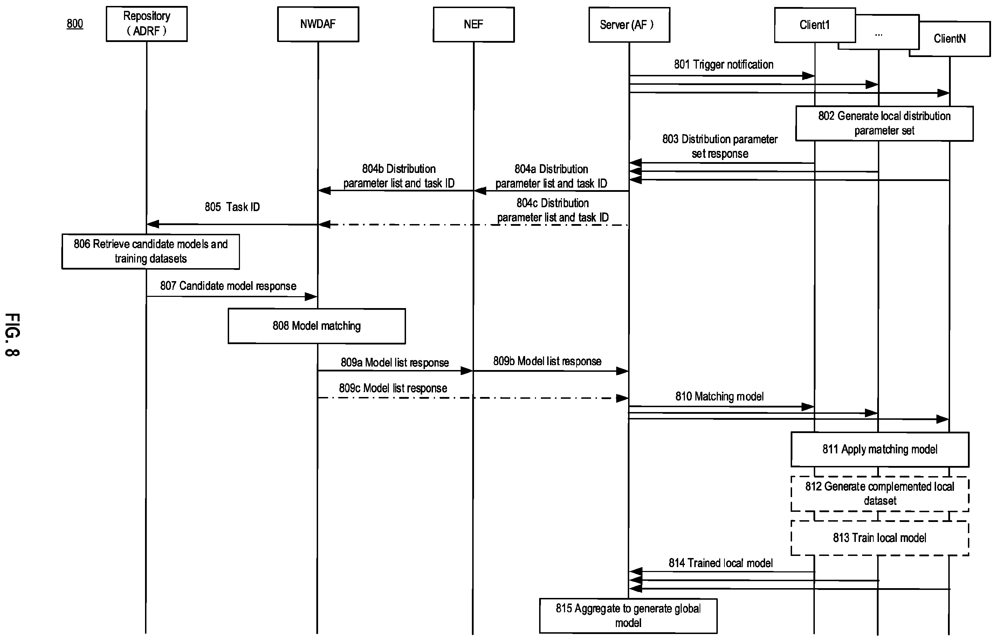

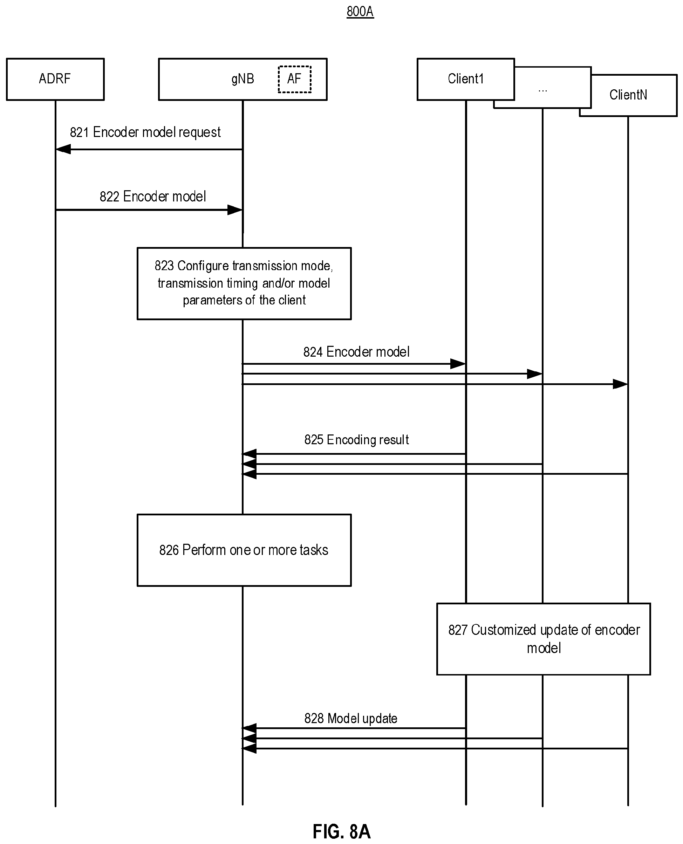

According to some embodiments, the server may send one or more encoder models to the client. The one or more encoder models may be used to determine data distribution characteristics of a local dataset of the client or other auxiliary information, as further described below with respect to FIG. 8A.

Specifically, in some embodiments, the server may send one or more encoder models to the client. The one or more encoder models may be configured to determine one or more characteristics associated with the client. The server may receive the determined one or more characteristics from the client. The one or more characteristics may act as auxiliary information from the client. Further, the server may perform one or more tasks based on the one or more characteristics. In some embodiments, the one or more tasks may be associated with an AI model.

In some embodiments, the one or more encoder models may include a dataset encoder model. The dataset encoder model may be configured to determine, based on a local dataset of the client, data distribution characteristics of the local dataset. The data distribution characteristics may be used as described previously. In some embodiments, the one or more encoder models may include a preference encoder model. The preference encoder model may be configured to determine a preference associated with the client. In some embodiments, the one or more encoder models may include an intent encoder model. The intent encoder model may be configured to determine an intent associated with the client. Other types of encoder models for determining other characteristics associated with the client are also possible.

In some embodiments, the server may be configured to retrieve the one or more encoder models from an encoder model repository. For example, the encoder model repository may be implemented in an Analytics Data Repository Function (ADRF) in the cellular network.

In some embodiments, the server may be configured to send to the client a configuration associated with a transmission mode of the client. The configured transmission mode may include a first mode associated with enabling an AI model or a second mode associated with not enabling the AI model. Preferably, the configuration associated with the first mode may further specify a transmission timing of the client or parameters of one or more AI models used by the client.

It should be understood that what is described above is merely an exemplary embodiment of the method 500. Details of various steps of the method 500 as well as additional or optional steps will be described in further detail below.

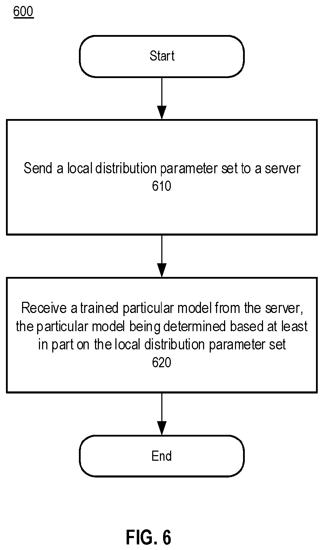

FIG. 6 illustrates a flowchart of a method 600 according to some embodiments of the present disclosure. According to some embodiments, the method 600 may be performed at a client for machine learning. For example, the method 600 may be performed by the client 120. The client 120 may be implemented by the above electronic device 300. Accordingly, the method 600 may be performed by the processing circuit 330 of the electronic device 300.

The method 600 may begin with step 610. In step 610, the client may be configured to send a local distribution parameter set to a server, the local distribution parameter set characterizing data distribution characteristics of a local dataset of the client.

In the present disclosure, a local dataset of a client refers to a collection of data that is held by or individually accessible to the client. The local dataset may include various types of data. For example, the local dataset may include data captured by sensors of the client, user data associated with a user of the client, communication data generated by communication of the client, etc. The client may be configured to generate a corresponding local distribution parameter set based on the local dataset (or a part of samples thereof). The client may have a plurality of local datasets and may generate a local distribution parameter set for each local dataset respectively.

The method 600 may continue to step 620. In step 620, the client may be configured to receive a trained particular model from the server, the particular model being determined based at least in part on the local distribution parameter set of the client.

As described above, the received particular model may be selected from one or more candidate models. The particular model may match the local dataset of the client. Specifically, among one or more training datasets used for training the one or more candidate models, a particular training dataset used for training the particular model may have the highest similarity with the local dataset of the client. The similarity may be determined based at least in part on a particular distribution parameter set of the particular training dataset and the local distribution parameter set of the local dataset of the client.

According to some embodiments of the present disclosure, the client may use the received particular model to generate an output data portion based on at least a portion of the local dataset. For example, the client may provide the at least a portion of the local dataset as input data to the received particular model to generate the output data portion corresponding to the at least a portion of the local dataset. Depending on the function to be implemented by the particular model, the output data portion may include at least one of a label, a prediction, and/or a decision generated based on the at least a portion of the local dataset.

According to some embodiments of the present disclosure, the client may be configured to implement a model user. The model user may be configured to use the output data portion generated by the particular model to perform one or more actions, for example, as described above with respect to the example of the access control device.

According to other embodiments of the present disclosure, the client may be configured to implement a model trainer. For example, the server may be configured as a server implementing a federated learning process, while the client is configured as one of a plurality of clients implementing the federated learning process. In this case, the client may use the output data portion generated by the particular model to complement the local dataset. Compared with the original local dataset (e.g., the local dataset used to generate the local distribution parameter set in step 610), the complemented local dataset additionally includes the output data portion that is generated by the particular model received in step 620. The client may be further configured to use the complemented local dataset as a training dataset to train the local model of the client, and send the trained local model to the server for aggregation, to generate a global model for the federated learning process.

The inventors of the present disclosure realized that, using the complemented local dataset as the training dataset may ensure that the local model is sufficiently trained. Therefore, the performance of the global model that aggregated the local model is also improved.

The inventors of the present disclosure also realized that, for the plurality of clients participating in the federated learning process, the complemented local dataset of each client is adaptively complemented based on data distribution characteristics of the local dataset of that client, which improves the accuracy of the complemented local dataset (specifically, the output data portion), thereby improving the accuracy of training the local model. Therefore, the performance of the global model that aggregated the local model is also improved.

The data complementation process as described in the present disclosure is automatic, fast, accurate, and/or low-cost. The process does not require the client to have prior experience and knowledge. Moreover, the process may be adaptively updated (e.g., adaptively updating a matching model that is sent to the client) based on changing scenarios faced by the client.

As mentioned above, the output data portion, which is generated by the particular model, may include a label, a prediction, or a decision generated based on at least a portion of the local dataset. For example, for an input data portion that lacks a label, the client may input the input data portion into the received particular model to generate a corresponding label. The client may associate the input data portion with the generated label, thereby forming labeled data. For an input data portion that lacks a prediction result, the client may input the input data portion into the received particular model to generate a corresponding prediction result. The client may associate the input data portion with the generated prediction result. For an input data portion that lacks a decision result, the client may input the input data portion into the received particular model to generate a corresponding decision result. The client may associate the input data portion with the generated decision result.

According to some embodiments of the present disclosure, during the complementation of a local dataset, the client may not participate in one or more rounds of the federated learning process. For example, during the generation of the complemented local dataset, the client may not train the local model, or the client may not send the trained local model to the server, or the client may indicate to the server not to aggregate the local model received from that client. After having generated the complemented local dataset, the client may send a completion indication to the server. The client may re-participate in subsequent rounds of the federated learning process. In this way, aggregating a local model that is trained by the client based on the incomplete training dataset into the global model may be avoided.

According to some alternative embodiments of the present disclosure, during the complementation of the local dataset, the client may participate in the federated learning process, but does not use an uncomplemented portion of the local dataset to train the local model. For example, a training dataset used by the client for training the local model may include a first input data portion in the local dataset that has a corresponding output data portion, but not include a second input data portion that does not have a corresponding output data portion. The client may use the second input data portion to train the local model only after complementing the output data portion corresponding to the second input data portion.

According to some embodiments, the client may receive one or more encoder models. The one or more encoder models may be used to determine data distribution characteristics of the local dataset of the client or other auxiliary information, as further described below with respect to FIG. 8A.

Specifically, in some embodiments, the client may be configured to receive the one or more encoder models from a base station or a server. The client may run the one or more encoder models. These models are configured to determine one or more characteristics associated with the client. Different models may be used to determine different characteristics associated with the client. The client may send the determined one or more characteristics to the server or the base station. For example, data representing the one or more characteristics may be encoded for transmission.

In some embodiments, the one or more encoder models may include a dataset encoder model, which is configured to determine, based on the local dataset of the client, data distribution characteristics of the local dataset. The data distribution characteristics may be used to select a suitable trained model for the client, as described above. In some embodiments, the one or more encoder models may include a preference encoder model, which is configured to determine a preference associated with the client. In some embodiments, the one or more encoder models may include an intent encoder model, which is configured to determine an intent associated with the client. Other types of encoder models are also possible.

In some embodiments, the one or more encoder models may be maintained in an encoder model repository. The encoder model repository may be located at a Data Analytics Repository Function (ADRF) in a cellular network. The server or the base station may retrieve a suitable encoder model from the ADRF and send it to a respective client.

In some embodiments, the client may be configured to receive a configuration associated with a transmission mode of the client from the base station or the server. The transmission mode may include a first mode associated with enabling an AI model or a second mode associated with not enabling the AI model. Optionally, the configuration associated with the first mode may further specify a transmission timing of the client or parameters of one or more AI models used by the client.

It should be understood that what is described above is merely an exemplary embodiment of the method 600. Details of various steps of the method 600 as well as additional or optional steps will be described in further detail below.

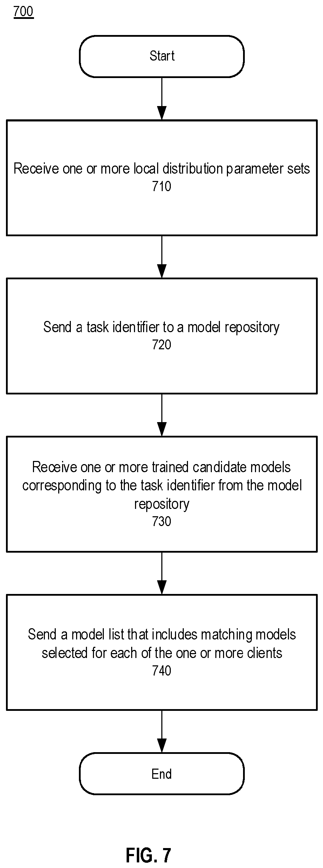

FIG. 7 illustrates a flowchart of a method 700 according to some embodiments of the present disclosure. According to some embodiments, the method 700 may be implemented by the above electronic device 400. Accordingly, the method 700 may be performed by the processing circuit 430 of the electronic device 400.

The method 700 may begin with step 710. In step 710, the electronic device 400 may be configured to receive one or more local distribution parameter sets. Each local distribution parameter set in the one or more local distribution parameter sets characterizes data distribution characteristics of a local dataset of a respective client of one or more clients.

The method 700 may continue to step 720. In step 720, the electronic device 400 may be configured to send a task identifier to a model repository. The task identifier may identify a particular training task associated with the one or more clients. The model repository maintains one or more trained models. The one or more models may be trained for different machine learning tasks.

For example, the one or more clients may include a first group of clients configured to perform a first training task (e.g., training a face recognition model based on local image sets) and may be associated with a first task identifier. Accordingly, the electronic device 400 may be configured to send the first task identifier associated with the first training task to the model repository.

The method 700 may continue to step 730. In step 730, the electronic device 400 may be configured to receive, from the model repository, one or more trained candidate models corresponding to the task identifier.

The one or more trained candidate models may be retrieved from the model repository based on the task identifier, to be returned to the electronic device 400. For example, for the above first group of clients, the one or more trained candidate models may include a set of trained face recognition models.

The method 700 may continue to step 740. In step 740, the electronic device 400 may be configured to send a model list. The model list may include a matching model that is selected from the one or more candidate models for each of the one or more clients, the matching model being determined based at least in part on a respective local distribution parameter set in the one or more local distribution parameter sets.

For example, for a first client in the one or more clients, the model list may include a first matching model that is selected based on a first local distribution parameter set of a first local dataset of the first client. For a second client in the one or more clients, the model list may include a second matching model that is selected based on a second local distribution parameter set of a second local dataset of the second client. If there is no respective matching model for a particular client in the one or more clients, the model list may include a default model associated with the task identifier.

According to some embodiments of the present disclosure, each candidate model in the one or more candidate models received by the electronic device 400 is trained using a respective training dataset in one or more training datasets. In order to determine a matching model for each client, the electronic device 400 may determine, from the one or more training datasets, a particular training dataset that has the highest similarity with the local dataset of the client. Then, the electronic device 400 may determine, from the one or more candidate models, a candidate model that corresponds to the particular training dataset, as the matching model for the client.

According to some embodiments of the present disclosure, for example, the similarity may be determined based at least in part on the local distribution parameter set of the local dataset and the particular distribution parameter set of the particular training dataset. For example, for a first client in the one or more clients, the electronic device 400 may select, based on a first local distribution parameter set of a first local dataset of the first client and a distribution parameter set of a training dataset of each candidate model, a first training dataset that has the highest similarity with the first local dataset. Then, the electronic device 400 may determine a first candidate model that was trained based on the first training dataset, as the first matching model for the first client. For a second client in the one or more clients, the electronic device 400 may select, based on a second local distribution parameter set of a second local dataset of the second client and a distribution parameter set of a training dataset of each candidate model, a second training dataset that has the highest similarity with the second local dataset. Then, the electronic device 400 may determine a second candidate model that was trained based on the second training dataset, as the second matching model for the second client.

According to some embodiments of the present disclosure, in step 730, the electronic device 400 may additionally receive, from the model repository, the one or more training datasets that are associated with the one or more trained candidate models. Each candidate model in the one or more candidate models was trained based on a respective training dataset in the one or more training datasets. The electronic device 400 may calculate a distribution parameter set of each training dataset based on the received one or more training datasets. The calculated distribution parameter set may be used together with the local distribution parameter set of the local dataset of the client to determine the similarity between the training dataset and the local dataset of the client. In some embodiments, the electronic device 400 may receive, from the model repository, samples (instead of all) of each training dataset in the one or more training datasets thereby saving communication and calculation overheads.

According to other embodiments of the present disclosure, the distribution parameter set of the respective training dataset in the one or more training datasets is calculated and maintained by the model repository. The electronic device 400 may receive one or more distribution parameter sets of the one or more training datasets from the model repository. In this case, the electronic device 400 does not have to receive the training datasets, and does not have to calculate the distribution parameter sets of the training datasets.

The distribution parameter set described herein (e.g., the local distribution parameter set of the local dataset of the client, or the distribution parameter set of the training dataset) may include one or more distribution parameters. The quantity and type of the one or more distribution parameters may vary depending on datasets. As an example, a dataset may follow a Gaussian distribution, a Gamma distribution, a Log-normal distribution, or any other type of distribution. Accordingly, the distribution parameter set may include distribution parameters corresponding to these distribution types. In some embodiments, the dataset follows a Gaussian distribution, and the distribution parameter set may include a mean ***µ*** and a standard deviation ***δ***. In some embodiments, the dataset follows a Gamma distribution, and the distribution parameter set may include a shape parameter ***α*** and an inverse scale parameter ***β***. In some embodiments, the dataset follows a Log-normal distribution, and the distribution parameter set may include a mean ***µ*** and a variance ***δ***. In other embodiments, the dataset may follow other types of distributions, and the distribution parameter set may include corresponding distribution parameters.

According to some embodiments of the present disclosure, the local distribution parameter set of the client may further include a type indicator indicating a distribution type. The electronic device 400 may calculate a distribution parameter set of a training dataset associated with a candidate model, based on the distribution type indicated by the type indicator.

According to some embodiments, in step 710, the electronic device 400 may receive the one or more local distribution parameter sets from a server for machine learning. The server may be associated with the one or more clients. For example, the server may be a server for federated learning, and the one or more clients may be training devices participating in the federated learning.

According to some embodiments, the task identifier sent by the electronic device 400 in step 720 may be received from the server for machine learning. For example, the task identifier may be received from the server together with the local distribution parameter sets.

According to some embodiments, the electronic device 400 may send, to a receiver (e.g., the server), a matching model for each client in the one or more clients together with a client identifier of that client in step 740. For example, the model list sent by the electronic device 400 may additionally include an identifier of each client in the one or more clients. Each identifier may be stored in the model list in association with the matching model for the client of that identifier. This allows the receiver of the model list to identify the respective matching model for each client.

The technology of the present disclosure may be performed in a cellular network. For example, the electronic device 400 may be implemented at a Network Data Analytics Function (NWDAF) of the cellular network. The model repository may reside at an Analytics Data Repository Function (ADRF) of the cellular network. The server for machine learning may be deployed with an Application Function (AF) of the cellular network. In some embodiments, the electronic device 400 at the NWDAF may communicate directly with the server. In other embodiments, the electronic device 400 at the NWDAF may communicate with the server via a Network Exposure Function (NEF) of the cellular network. The specific receiving path may be determined based on the AF deployed at the server. For example, if the AF is trusted, the electronic device 400 may receive the distribution parameter set and the task identifier directly from the server. Otherwise, the electronic device 400 may receive the distribution parameter set and the task identifier from the server via the NEF.

It should be understood that what is described above is merely an exemplary embodiment of the method 700. Details of various steps of the method 700 as well as additional or optional steps will be described in further detail below.

### 4. Exemplary Processes

FIG. 8 illustrates a schematic diagram of a process 800 according to some embodiments of the present disclosure. The process 800 is performed in the environment of a cellular network. The cellular network may include an ADRF, an NWDAF, an NEF, etc. It should be understood that the cellular network is merely an example of a communication environment in which the technology of the present disclosure may be performed. In other embodiments, the technology of the present disclosure may be performed in other communication environments without limitation.

The process 800 may involve a server and clients 1-N for machine learning. The server and the clients may be implemented by the above electronic device 200 and electronic device 300, respectively. The NWDAF may be implemented by the above electronic device 400. In the example of the cellular network, the model repository may reside at the ADRF, and the server may be deployed with an AF. The clients may reside at one or more User Equipment (UE). Each UE may access the cellular network through a base station (e.g., gNB) and communicate with other network element devices. In other examples, one or more of the model repository, the server, and the clients may reside in other suitable locations.

The process 800 may begin with step 801. In step 801, the server may send a trigger notification to the clients. The trigger notification may be used to initiate execution of the process 800. In some embodiments, the server may send the trigger notification periodically. In other embodiments, the server may send the trigger notification based on a trigger request from the clients. For example, if a proportion of clients exceeding a threshold (e.g., 50%) among clients 1-N send a trigger request, the server may send the trigger notification. Alternatively, the server may send the trigger notification individually for a single client based on a trigger request from that client.

In some embodiments, when a client is a training device for federated learning, the client may send the trigger request based on checking of a local dataset. For example, if the local dataset lacks an output data portion, the client may send the trigger request, thereby triggering data complementation. Specifically, the trigger request may be sent when the completeness of the local dataset is lower than a threshold. In other embodiments, when the client is a model user, the client may send the trigger request based on lack of locally available models or the performance of locally available models being lower than a threshold.

In step 802, in response to receiving the trigger request, the client may generate a local distribution parameter set of the local dataset.

The dataset (e.g., the local dataset or the training dataset) described in the present disclosure may include various types of data. In some embodiments, the dataset may include media data, which may include but is not limited to text data, image data, audio data, video data, haptic data, etc. In some embodiments, the dataset may include sensor data, which may include data collected by one or more sensors, and the data may describe one or more physical or chemical parameters, including but not limited to temperature, humidity, speed, acceleration, altitude, electrical parameters, magnetic parameters, purity, pH value, concentration, etc. In some embodiments, the dataset may include communication data, which may include but is not limited to measurement data or metric data related to communication environment, communication quality, and communication status. In some embodiments, the dataset may include user data, which may include but is not limited to user behavior data, user preference data, user analysis data, etc. In some embodiments, the dataset may include a combination of these data. In some embodiments, the dataset may include data obtained after preprocessing these data.

As described above, a local dataset may follow various types of distributions. For example, the dataset may follow a Gaussian distribution, a Gamma distribution, a Log-normal distribution, or any other type of distribution. Accordingly, the local distribution parameter set may include distribution parameters corresponding to these distribution types. In some embodiments, the local distribution parameter set may include a mean ***µ*** and a standard deviation ***δ*** for a Gaussian distribution. In some embodiments, the local distribution parameter set may include a shape parameter ***α*** and an inverse scale parameter ***β*** for a Gamma distribution. In some embodiments, the local distribution parameter set may include a mean ***µ*** and a variance ***δ*** for a Log-normal distribution. In other embodiments, the local dataset may follow other types of distributions, and the local distribution parameter set may include corresponding distribution parameters. The client may generate, based on the entire local dataset or based on a part of samples thereof, a local distribution parameter set characterizing the local dataset.

In some embodiments, the client may use a dataset encoder model to determine the local distribution parameter set. The dataset encoder model may be applied to the local dataset of the client or a part of samples thereof. The dataset encoder model may analyze and process the input local dataset to extract data distribution characteristics of the local dataset. The data distribution characteristics may be represented as the local distribution parameter set.

In some embodiments, the client may receive the dataset encoder model from a base station (e.g., gNB) or the server. As further described below with respect to FIG. 8A, the client may receive one or more encoder models from the base station or the server. The one or more encoder models may be configured to determine one or more characteristics of the client. The one or more encoder models may include a dataset encoder model. The determined one or more characteristics may include data distribution characteristics of the local dataset of the client. The client may provide the local dataset as input to the dataset encoder model. The dataset encoder model may analyze the local dataset and extract a local distribution parameter set that is capable of characterizing its data distribution characteristics.

In some embodiments, the client may not rely on the dataset encoder model received from the base station or the server. For example, the client may use a local dataset encoder model to generate the local distribution parameter set. For another example, the client may use algorithms other than the dataset encoder model to process the local dataset to generate the local distribution parameter set.

In step 803, the client may send a distribution parameter set response to the server. Each distribution parameter set response includes a respective local distribution parameter set of a respective client. In some embodiments, the respective local distribution parameter set also includes a type indicator corresponding to a distribution type.

In some alternative embodiments, in response to the trigger notification, instead of performing step 802 and step 803, the client may send the local dataset (or a part thereof) to the server, and the server generates the respective local distribution parameter set.

In step 804, the server may send a distribution parameter list together with a task identifier to the NWDAF. For example, the server may consolidate obtained local distribution parameter sets to generate the distribution parameter list. The distribution parameter list includes one or more local distribution parameter sets associated with one or more clients. The server may also associate each local distribution parameter set with a corresponding client, thereby recording the client from which each local distribution parameter set originated. The distribution parameter list may also include client identifiers associated with the one or more clients, thereby associating each client identifier with each local distribution parameter set. In an embodiment of federated learning, the server may further associate each distribution parameter set with a particular training task (e.g., a particular task identifier) that the corresponding client participated in, as a single server may serve multiple groups of clients that perform multiple learning tasks.

In an embodiment of a cellular network, the server may be deployed with an AF. Depending on the properties of the AF, step 804 may have different sub-steps. For example, if the AF is untrusted, sub-steps 804a and 804b may be performed. In sub-step 804a, the server sends the distribution parameter list together with the task identifier to the NEF. Then, in sub-step 804b, the NEF sends the distribution parameter list together with the task identifier to the NWDAF. If the AF is trusted, it is not necessary to forward the distribution parameter list together with the task identifier via the NEF. Therefore, instead of performing sub-steps 804a and 804b, sub-step 804c is performed. In step 804c, the AF sends the distribution parameter list together with the task identifier directly to the NWDAF.

In step 805, the NWDAF may send the task identifier received in step 804 to the model repository. The model repository may reside at the ADRF. The model repository maintains one or more trained models. The one or more models may be trained for different machine learning tasks. For example, the one or more models may include dozens of, hundreds of, or even more models. In some embodiments, the model repository may also maintain one or more training datasets that were used for training the one or more models. In some embodiments, the model repository may also maintain one or more distribution parameter sets of the one or more training datasets.

In step 806, the model repository may retrieve, based on the task identifier received in step 805, one or more candidate models corresponding to the task identifier. The one or more candidate models may be already trained for tasks that are the same as or similar to the training task as indicated by the task identifier. For example, if the task identifier indicates a task of training a face recognition model, the one or more candidate models may include a set of trained face recognition models maintained in the model repository. In some embodiments, the model repository may also retrieve one or more training datasets associated with the retrieved one or more candidate models, each candidate model in the one or more candidate models being trained based on a respective training dataset in the one or more training datasets. In some embodiments, the model repository may also retrieve one or more distribution parameter sets associated with the one or more candidate models (more specifically, the one or more training datasets), each distribution parameter set in the one or more distribution parameter sets indicating data distribution characteristics of a respective training dataset.

In step 807, the model repository may send a candidate model response to the NWDAF. The candidate model response may include the one or more candidate models determined in step 806. In some embodiments, the candidate model response may include one or more training datasets (or a part of samples thereof) associated with the one or more candidate models. In other embodiments, the candidate model response may include one or more distribution parameter sets associated with the one or more candidate models (more specifically, the one or more training datasets), without including the training datasets themselves.

In step 808, the NWDAF may perform model matching. The model matching may be performed based on the distribution parameter list associated with the client received in step 804 and the one or more training datasets (or the one or more distribution parameter sets of the one or more training datasets) received in step 807. Specifically, for a local distribution parameter set for a particular client in the distribution parameter list, the NWDAF may calculate a similarity between a local dataset of the particular client and each training dataset in the received one or more training datasets based on the local distribution parameter set and the distribution parameter set of the training dataset. Then, the NWDAF may select, in the one or more training datasets, a particular training dataset that has the highest similarity with the local dataset of the particular client. The NWDAF may determine, in the one or more candidate models, a particular candidate model corresponding to the particular training dataset as a matching model for the particular client. The particular candidate model was trained based on the particular training dataset. The NWDAF may perform the model matching for each client associated with the distribution parameter list, thereby obtaining a matching model for each client.

In some embodiments, the NWDAF receives training datasets from the model repository. The NWDAF may calculate a distribution parameter set of a dataset based on the received training dataset. The calculation manner may be the same as the manner in which the client calculates a local distribution parameter set of a local dataset. In some embodiments, the NWDAF may determine a distribution type based on a type indicator associated with the distribution parameter set of the local dataset, such as a Gaussian distribution, a Gamma distribution, a Log-normal distribution, etc. Then, the NWDAF may assume that the training dataset has that distribution type and calculate one or more distribution parameters corresponding to that distribution type accordingly. In other embodiments, each dataset has a consistent distribution type. Therefore, it may not be necessary to rely on the type indicator.

In other embodiments, the NWDAF receives the distribution parameter set of the training dataset from the model repository. Therefore, the NWDAF does not have to calculate the distribution parameter set of the training dataset.

In step 809, the obtained one or more matching models may be organized into a model list response for sending to the server. In some embodiments, each model list response may include one or more matching models associated with a single task identifier. The NWDAF may include the obtained one or more matching models in the model list response in association with corresponding one or more client identifiers. In other embodiments, each model list response may include one or more matching models associated with a plurality of task identifiers. The NWDAF may include the obtained one or more matching models in the model list response in association with one or more client identifiers and one or more task identifiers. The one or more client identifiers or one or more task identifiers may be received by the NWDAF in step 804.

Depending on the properties of the AF deployed at the server, step 809 may have different sub-steps. For example, if the AF is untrusted, sub-steps 809a and 809b may be performed. In sub-step 809a, the NWDAF sends the model list response to the NEF. Then, in sub-step 809b, the NEF sends the model list response to the server. If the AF is trusted, it is not necessary to forward the model list response via the NEF. Therefore, instead of performing sub-steps 809a and 809b, sub-step 809c is performed. In step 809c, the NWDAF sends the model list response directly to the server.

In step 810, the server may send each matching model in the received model list response to a respective client. For example, the server may send a matching model in the model list response to a client that corresponds to a client identifier associated with the matching model. The server may determine the matching model for each client based on the client identifier (and optionally the task identifier). In some embodiments, sending the matching model may include sending a set of model parameters of the model. In other embodiments, sending the matching model may include sending a storage location associated with a set of model parameters of the model, so that the client may retrieve the set of model parameters from the storage location.

After receiving the matching model, in step 811, the client may apply the matching model to the local dataset, thereby generating an output data portion.

When the client is a model user, the output data portion generated by the matching model may be used to take one or more actions, like one described above with respect to the access control device.

When the client is a model trainer that participates in federated learning, the output data portion may be used to complement the local dataset of the client. The complemented local dataset may serve as a training dataset for training the local model. Specifically, in step 812, each client may apply the received matching model to at least a portion of the local dataset (e.g., an input data portion that lacks a corresponding output data portion), thereby generating an output data portion. The output data portion may be consolidated with the at least a portion of the local dataset so as to complement the at least a portion of the local dataset. Optionally, the client may send a completion indication to the server after completing the complementation. Optionally, after receiving the completion indication, the server may send to the client an indication that allows the client to participate in the training.

In step 813, the client may use the complemented local dataset as a complete training dataset to train the local model. The local model is associated, for example, with the task identifier described previously. That is, the training task identified by the task identifier of the client includes training the local model. In the present disclosure, the trained local model may be a model of various appropriate types, including machine learning models that have currently developed and will be developed. Each artificial intelligence model may be represented by a set of model parameters that characterizes the model. In addition, the method used for training the local model may be various appropriate methods. The technology of the present disclosure does not limit the type and the training method of the model. Example model types include but are not limited to models trained by Convolutional Neural Networks (CNN), Deep Neural Networks (DNN), Recurrent Neural Networks (RNN), Long Short-Term Memory (LSTM), generative models, random forests, and variants and enhanced algorithms thereof.

After training the local model, in step 814, the client may send the trained local model to the server.

Then, in step 815, the server may aggregate one or more trained local models received from one or more clients to generate a global model. The generated global model may be sent to the one or more clients for use or to perform the next training round.

In the process 800, the data complementation process of the client may span one or more training rounds of federated learning. In some embodiments, a particular client participating in the process may skip the one or more training rounds of federated learning during the data complementation process. For example, the particular client may not train the local model or not upload the local model. Additionally or alternatively, the server may not aggregate the local model from the particular client before receiving a completion indication. In other embodiments, the particular client may participate in federated learning based only on a first portion of a local dataset (e.g., the first portion is complete). An incomplete second portion of the local dataset may be used for federated learning after the data complementation process.

Table 1 shows example input information for an NWDAF according to some embodiments of the present disclosure. In these embodiments, the client is implemented as a User Equipment (UE) associated with a user.

**Table 1**

| Input Information | Source | Description |
|---|---|---|
| User (group) identifier | AF | IP address of the UE |
| Distribution parameter set of user dataset | AF | One or more distribution parameters describing data distribution characteristics of a local dataset of the UE |
| Task identifier | AF | Training task of the UE, or service provided by the UE to the user (e.g., face recognition service, etc.) |
| Candidate model | ADRF | Trained model |
| Training dataset | ADRF | Training dataset or samples thereof used for training a candidate model |
| Distribution parameter set of training dataset | ADRF | Distribution parameter set of a training dataset or samples thereof used for training a candidate model |

Table 2 shows example output information for an NWDAF according to some embodiments of the present disclosure.

**Table 2**

| Output Information | Description |
|---|---|
| Model list | Matching models for local datasets of the UE |

It should be understood that what is described above is merely an exemplary embodiment of the process 800. The technology of the present disclosure may include more or fewer steps, and may be implemented in a communication environment different from the cellular environment. For example, in some embodiments, the server, the NWDAF, and the model repository may reside in the same device, so that the technology of the present disclosure may be implemented in a simple server-client architecture. For another example, in some embodiments, there are intermediate elements (not shown) between various elements of the process 800 for relaying and forwarding. For yet another example, in some embodiments, the server may be implemented at a network element other than the AF, or the model repository may be implemented at a network element other than the ADRF. Alternatively, operations performed by the NWDAF may be performed by other network elements.

FIG. 8A illustrates a schematic diagram of a process 800A according to some embodiments of the present disclosure. The process 800A may be performed in an environment of a cellular network. The process 800A may involve clients 1-N and a base station (e.g., gNB) or an associated AF. In some embodiments, the AF may implement a server associated with an AI model. The clients may reside at one or more User Equipment (UEs). Each of the UEs may access the cellular network via the base station (e.g., gNB). The clients may be associated with the AI model, for example, participating in training or using the AI model.

At step 821, the base station may be configured to send an encoder model request to an encoder model repository. In some embodiments, the encoder model request may include a specified type of encoder model. In other embodiments, the encoder model request may include information associated with a desired type of encoder model. This information may be analyzed to determine an appropriate type of encoder model for each client. For example, in a scenario of federated learning, this information may include a task identifier of a federated learning process in which the client participates. The task identifier may be used to determine an appropriate type of encoder model (e.g., an appropriate dataset encoder model). In other scenarios, this information may include other information associated with the client.

The encoder model repository may be configured to store or maintain one or more candidate encoder models. Optional types of encoders include, but are not limited to, dataset encoder models, preference encoder models, intent encoder models, or any other suitable types of encoders.

In some embodiments, the encoder model repository may be implemented at an Analytics Data Repository Function (ADRF) in the cellular network. In other embodiments, the encoder model repository may be implemented at any other location accessible by the base station or the server.

At step 822, the encoder model repository may send one or more encoder models in response to the encoder model request. The encoder model repository may determine one or more suitable encoder models. In some embodiments, the one or more encoder models may be determined based on an analysis of the information in the encoder model request. For example, in the scenario of federated learning, an appropriate dataset encoder model may be determined based at least in part on the task identifier in the information. The dataset encoder model may be used to obtain data distribution characteristics of a local dataset of the client. In some scenarios, information associated with the desired type of encoder model may be associated with a preference of the client. Accordingly, an appropriate preference encoder model may be determined based at least in part on this information. In some scenarios, information associated with the desired type of encoder model may be associated with an intent of the client. Accordingly, an appropriate intent encoder model may be determined based at least in part on this information.

At step 823, the base station may send to the client a configuration associated with a transmission mode of the client. The configuration may be associated with whether the client enables an AI model. For example, the transmission mode specified by the configuration may be selected from one of the following modes: (i) a first mode that is associated with enabling an AI model, or (ii) a second mode that is associated with not enabling an AI model. When the first mode is configured for the client, the configuration associated with the first mode may further specify a first transmission timing for the client. In some embodiments, the first transmission timing may specify scheduling of one or more communication transmissions of the client in the first mode. Additionally, the configuration associated with the first mode may further specify parameters of one or more AI models to be used by the client. The one or more AI models may include the aforementioned AI models associated with federated learning or any other AI models to be used by the client. When the second mode is configured for the client, the configuration associated with the second mode may specify a second transmission timing for the client. In some embodiments, the second transmission timing may specify scheduling of one or more communication transmissions of the client in the second mode. The one or more communication transmissions may be the same as or may be different from the one or more communication transmissions described above with respect to the first mode. In some embodiments, the second transmission timing associated with the second mode may be different from the first transmission timing associated with the first mode. That is, the transmission timing of the client may vary based on whether the AI model is enabled.

In some embodiments, in the first mode, the configured first transmission timing may also vary depending on different AI models enabled by the client. For example, the first transmission timing configured when the client enables a first AI model may be different from the first transmission timing configured when the client enables a second AI model.

In step 824, the base station may send to a respective client the one or more encoder models received in step 822.

In step 825, the client may upload one or more encoding results to the base station. Specifically, the client may run the received one or more encoder models locally. The one or more encoder models may analyze data and behavior of the client and generate respective encoding results. For example, the dataset encoder model may analyze the local dataset of the client to generate the data distribution characteristics. The data distribution characteristics may be encoded as part of the encoding results. For another example, the preference encoder model may collect and analyze data associated with user behavior to extract preference data characterizing the user's preferences. The preference data may be encoded as part of the encoding results. For yet another example, the intent encoder model may collect and analyze data associated with user behavior to extract intent data characterizing the user's intent. The intent data may be encoded as part of the encoding results. In other embodiments, other types of encoder models may produce other types of encoded data. The encoded data may be considered an abstraction of the local data or the user behavior of the client, which provides insights into the local data or the user behavior of the client without revealing user privacy or compromising the security of the client.

In step 826, the base station may perform one or more tasks. Specifically, the base station may perform one or more tasks based on the encoded data received in step 825. In some embodiments, the one or more tasks may be associated with an AI model. For example, the encoded data may be used, as auxiliary information from the client, for training, updating, selection, or use of the AI model. In the above scenario of federated learning, the encoded data may include a local distribution parameter set of the client. The local distribution parameter set may be used to select a trained particular model that is suitable for the client, as described above. In other scenarios, the encoded data may include data associated with user's preferences or intents, which may be used for customization of a model associated with the client. For example, an intelligent driving model matching the user's driving preferences may be trained and deployed based on the preferences. Performing the one or more tasks based on the auxiliary information from the client may improve the performance and experience associated with the AI model.

Optionally, in step 827, the client may determine a localized update to the received one or more encoder models. The encoder models obtained from the encoder model repository are not necessarily adapted to every client. Therefore, the client may evaluate model performance when running the encoder model. The client may determine an update to the encoder model, which may be matched to the local environment of the client.

In step 828, the client may upload the determined update or the updated encoder model to the base station. In some embodiments, the received update or the updated model may be evaluated. The evaluation may be performed by one or both of the base station and the encoder model repository (e.g., ADRF). For example, the degree of performance improvement, applicable scope, model size, etc., of the updated encoder model may be evaluated. Based on the result of the evaluation, it may be determined whether to accept the model update proposed by the client. If it is determined to accept the model update, the updated encoder model may be stored in the encoder model repository for subsequent use. If it is determined not to accept the model update, the updated encoder model may be discarded. In some embodiments, the base station may feed back, to the corresponding client, an indication of acceptance or non-acceptance of the model update.

It should be understood that what is described above is merely an exemplary embodiment of the process 800A. The technology of the present disclosure may include more or fewer steps, and these steps may be performed in a different order. For example, the configuration in step 823 may be performed at any suitable time. Furthermore, in alternative embodiments, the process 800A may be implemented in a communication environment different from the cellular environment.

The process 800A provides one or more encoder models to the client to obtain auxiliary information associated with the client. The auxiliary information may facilitate one or more tasks (including but not limited to tasks associated with AI models). In some embodiments, the process 800A may be performed in combination with the methods or processes (e.g., the process 800) described in the present disclosure. However, it should be understood that the process 800A is not limited to the above application scenarios associated with data distribution characteristics of local datasets. As described above, the process 800A may be performed for the purpose of obtaining other auxiliary information (e.g., user preferences, intents, etc.). Therefore, in alternative embodiments, the process 800A may be performed independently of the methods or processes (e.g., the process 800) described in the present disclosure without limitation.

### 5. Exemplary Calculation Methods

This section describes one or more exemplary calculation methods, which may be used to calculate a distribution parameter set and calculate a similarity between two datasets based on distribution parameter sets. It should be understood that the datasets and the calculation methods used in this section are merely exemplary. In other embodiments, alternative datasets and alternative calculation methods may be used without departing from the scope of the present disclosure.

According to an embodiment of the present disclosure, a local dataset of a client is represented as dataset *LD.* Dataset *LD* may include N samples. Dataset *LD* may be represented as: $\left[\left[\begin{matrix}\left[{f}_{11}^{1}, {f}_{12}^{1}, ⋯, {f}_{1 Q}^{1}\right] \\ \left[{f}_{21}^{1}, {f}_{22}^{1}, ⋯, {f}_{2 Q}^{1}\right] \\ ⋮ \\ \left[{f}_{M 1}^{1}, {f}_{M 2}^{1}, ⋯, {f}_{MQ}^{1}\right]\end{matrix}\right], \left[\begin{matrix}\left[{f}_{11}^{2}, {f}_{12}^{2}, ⋯, {f}_{1 Q}^{2}\right] \\ \left[{f}_{21}^{2}, {f}_{22}^{2}, ⋯, {f}_{2 Q}^{2}\right] \\ ⋮ \\ \left[{f}_{M 1}^{2}, {f}_{M 2}^{2}, ⋯, {f}_{MQ}^{2}\right]\end{matrix}\right], ⋯, \left[\begin{matrix}\left[{f}_{11}^{N}, {f}_{12}^{N}, ⋯, {f}_{1 Q}^{N}\right] \\ \left[{f}_{21}^{N}, {f}_{22}^{N}, ⋯, {f}_{2 Q}^{N}\right] \\ ⋮ \\ \left[{f}_{M 1}^{N}, {f}_{M 2}^{N}, ⋯, {f}_{MQ}^{N}\right]\end{matrix}\right]\right]$ (1) where N represents a number of samples, M represents a number of data points that are included in each sample, and Q represents a number of feature dimensions of each data point. In expression (1), N samples are listed from left to right. In each sample, M data points are listed from top to bottom. In each data point, Q values of the data point on Q feature dimensions are listed from left to right.

The local dataset may contain various types of data and be organized accordingly. For example, if dataset *LD* is a radar measurement dataset, N represents a number of measurement samples, M may represent a number of measurement points contained in each measurement sample, and ***Q*** may represent a number of feature dimensions of each measurement point. If each measurement point characterizes one coordinate in a three-dimensional space, ***Q*** may be 3. For another example, if dataset ***LD*** is an image set, ***N*** may represent a number of extracted picture samples, ***M*** may represent a number of channels for each picture sample, and ***Q*** may represent a number of dimensions of a vector that is obtained after flattening the data of each channel. The flattening indicates obtaining a vector by concatenating a tail of each row of the data matrix to a head of the next row.

It should be understood that the above manner of data organization for the local dataset is merely one example. Any other suitable manner of data organization may be adopted. For example, although the local dataset ***LD*** is represented as a high-order tensor, it may be alternatively represented as a vector or a scalar without departing from the scope of the present disclosure.

In some embodiments, in order to reduce processing load, the original local dataset may be preprocessed to obtain the local dataset ***LD***. For example, the original local dataset may be down-sampled to reduce the value of ***N***. Additionally or alternatively, the original local dataset may be subjected to dimensionality reduction processing to reduce the value of ***M*** or ***Q***. Other processing is also possible. Combinations of these processes are also possible.

Data distribution characteristics may be calculated for each feature dimension of each sample of the local dataset ***LD***. The data distribution characteristics may be represented by a distribution parameter set including one or more distribution parameters. In the example of this section, it is assumed that each feature dimension of the samples of the local dataset ***LD*** follows a Gaussian distribution. Accordingly, the distribution characteristics of the data of the local dataset ***LD*** may be characterized using mean (***µ***) and standard deviation (***δ***). The mean and the standard deviation of data that follows a Gaussian distribution may be calculated through known methods. For the above dataset ***LD***, the calculated distribution parameter set ***LX*** may be represented as: $\left[\left[{μ}_{1}^{1}, {δ}_{1}^{1}\right], \left[{μ}_{2}^{1}, {δ}_{2}^{1}\right], ⋯, \left[{μ}_{Q}^{1}, {δ}_{Q}^{1}\right]\right] , \left[\left[{μ}_{1}^{2}, {δ}_{1}^{2}\right], \left[{μ}_{2}^{2}, {δ}_{2}^{2}\right], ⋯, \left[{μ}_{Q}^{2}, {δ}_{Q}^{2}\right]\right] , ⋯ , \left[\left[{μ}_{1}^{N}, {δ}_{1}^{N}\right], \left[{μ}_{2}^{N}, {δ}_{2}^{N}\right], ⋯, \left.\left[{μ}_{Q}^{N}, {δ}_{Q}^{N}\right]\right]\right]$ (2) where, each pair of mean and standard deviation (***µ***, ***δ***) characterizes the data distribution characteristics of one corresponding sample in the dataset *LD* in one feature dimension.

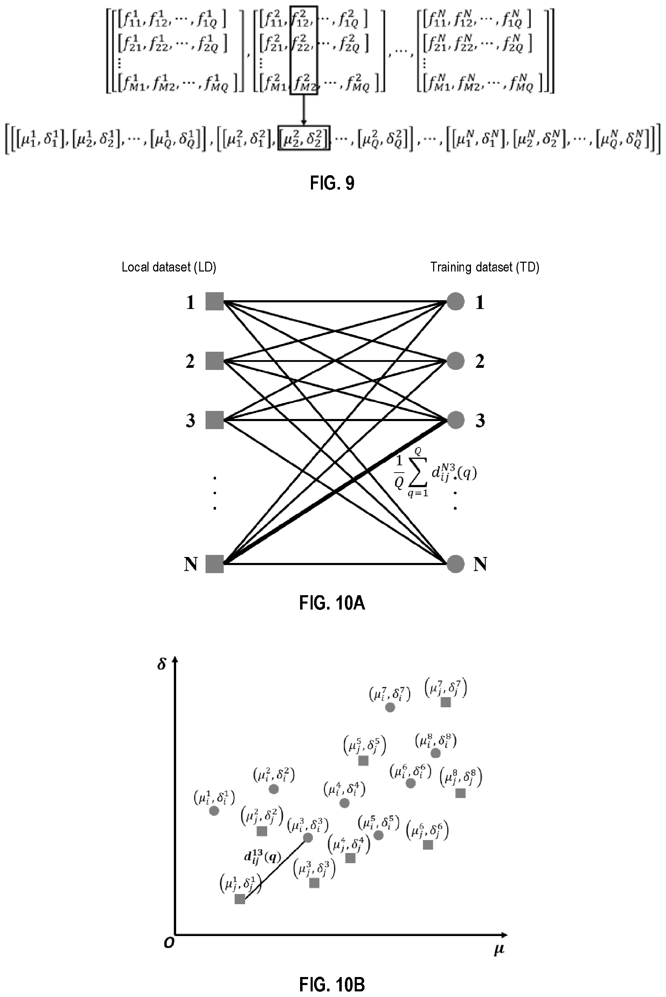

FIG. 9 illustrates a correspondence relationship between a local dataset and a local distribution parameter set according to some embodiments of the present disclosure. As illustrated in FIG. 9, a pair of mean and standard deviation $\left[{μ}_{2}^{2}, {δ}_{2}^{2}\right]$ exemplarily characterizes the distribution characteristics of data of the second sample of the local dataset *LD* on the second feature dimension (represented by a bold frame). Other pairs of means and standard deviations may similarly correspond to the distribution characteristics of data of corresponding samples in the dataset *LD* on corresponding feature dimensions.

It should be understood that the Gaussian distribution used in the present disclosure is merely exemplary. In practical applications, it may be assumed that the dataset *LD* follows other types of distributions, and the distribution parameter set is calculated based on this assumption. The other types of distributions may include, but are not limited to, for example, Gamma distribution, Log-normal distribution, etc. When the dataset *LD* follows a Gamma distribution, a shape parameter ***α*** and an inverse scale parameter ***β*** may be used alternatively. When the dataset *LD* follows a Log-normal distribution, a mean ***µ*** and a variance ***δ*** may be used alternatively. Furthermore, these distributions may be one-dimensional or multi-dimensional.

For a training dataset *TD* in the model repository, the distribution parameter set ***TX*** of the training dataset may be calculated in the same manner. As described above, the training dataset *TD* retrieved from the model repository and the local dataset *LD* of the client are both associated with the same training task, because the training dataset *TD* is retrieved based on the task identifier associated with the client. Therefore, the training dataset ***TD*** and the local dataset ***LD*** are likely to adopt a similar manner of data organization. If the manner of data organization for the training dataset retrieved from the model repository is different from that of the local dataset ***LD***, the training dataset may be reorganized (e.g., by the NWDAF) to obtain the training dataset ***TD***. Accordingly, the distribution parameter set ***TX*** of the training dataset ***TD*** may have a form similar to the distribution parameter set ***LX***.

Before calculating the distribution parameter set ***TX***, the training dataset ***TD*** may also be preprocessed (e.g., down-sampling, dimensionality reduction, etc.). In the example of this section, the training dataset ***TD*** contains the same ***N***, ***M***, and ***Q*** values as the local dataset ***LD***. In other examples, the size of the training dataset ***TD*** may be different from that of the local dataset ***LD*.** Accordingly, one or more of the ***N***, ***M***, and ***Q*** values of the training dataset ***TD*** may be different from those of the local dataset ***LD***.

After obtaining the distribution parameter set ***LX*** of the local dataset ***LD*** and the distribution parameter set ***TX*** of the training dataset ***TD***, a similarity between the local dataset ***LD*** and the training dataset ***TD*** may be measured based on the distribution parameter set ***LX*** and the distribution parameter set ***TX***. FIG. 10A and FIG. 10B illustrate exemplary processes of calculating the similarity between a local dataset and a training dataset according to embodiments of the present disclosure.

FIG. 10A illustrates an exemplary process of calculating a similarity between a local dataset and a training dataset according to some embodiments of the present disclosure. As illustrated in the figure, each sample of the local dataset ***LD*** and the training dataset ***TD*** may be placed in left and right columns respectively. For example, the local dataset ***LD*** is placed in the left column, and each sample of the training dataset ***TD*** is placed in the right column. Each sample in the left column may be connected to each sample in the right column. Each connection between each sample in the left column and each sample in the right column may be assigned a respective weight, thereby establishing a bipartite graph. A distance between the local dataset ***LD*** and the training dataset ***TD*** may be calculated based on the bipartite graph.

In some embodiments, the KM (Kuhn-Munkres) algorithm may be used to calculate a minimum distribution distance between the local dataset ***LD*** and the training dataset ***TD***. The minimum distribution distance is calculated based on the weight of each connection. The minimum distribution distance may characterize the similarity between the local dataset ***LD*** and the training dataset ***TD***. The larger the minimum distribution distance, the lower the similarity between the local dataset ***LD*** and the training dataset ***TD***. In other embodiments, other appropriate algorithms than the KM algorithm may be used to calculate the distance between the local dataset ***LD*** and the training dataset ***TD***, and the calculated distance serves as an alternative measure of the similarity between the two datasets.

In some embodiments, the weight assigned to each connection may be calculated based at least in part on the distribution parameter set ***LX*** and the distribution parameter set ***TX***. As an example, the weight may be associated with an average sample distance between two samples. In the example of this section, the weight may be equal to the average sample distance. In other examples, the weight may be a function of the average sample distance. In still other examples, the weight may also be associated with one or more additional factors other than the distribution parameter set ***LX*** and the distribution parameter set ***TX***.

In some embodiments, the average sample distance between two samples may be calculated based at least in part on a set of feature distances ***d*** between each feature dimensions between the two samples. In the example of this section, the average sample distance may be represented as an average value of a set of feature distances ***d***. In other examples, the average sample distance between two samples may be measured in other ways. For example, for the ***h***-th sample in the local dataset ***LD*** and the ***k***-th sample in the training dataset ***TD***, the average sample distance between these two samples may be represented as: $\frac{1}{Q} {\sum }_{q = 1}^{Q} {d}^{hk} \left(q\right)$ (3) where ***h*** represents an index of the sample in the local dataset ***LD*** in the left column, ***k*** represents an index of the sample in the training dataset ***TD*** in the right column, and ***q*** represents an index of the feature dimension (***q*** is less than or equal to ***Q***). ***d^{hk}***(***q***) represents the feature distance between the ***h***-th sample in the local dataset ***LD*** and the ***k***-th sample in the training dataset ***TD*** on the ***q***-th feature dimension.

In some embodiments, the feature distance ***d*** may be calculated based at least in part on the distribution parameter set ***LX*** and the distribution parameter set ***TX***. For example, the feature distance ***d^{hk}***(***q***) may be calculated based on distribution parameters $\left[{μ}_{q}^{h}, {δ}_{q}^{h}\right]$ **(**∈***LX*)** of the ***h***-th sample in the local dataset ***LD*** on the ***q***-th feature dimension and distribution parameters $\left[{μ}_{q}^{k}, {δ}_{q}^{k}\right]$ **(**∈***TX*)** of the ***k***-th sample in the training dataset ***TD*** on the ***q***-th feature dimension. For example, the feature distance ***d^{hk}***(***q***) may be calculated as a Euclidean distance between two-dimensional coordinate points represented by these two distribution parameters.

FIG. 10B illustrates an example of calculating a feature distance between two samples of a local dataset and a training dataset according to some embodiments of the present disclosure.

As illustrated in the figure, each element in the distribution parameter set ***LX*** of the local dataset ***LD*** may be placed in a two-dimensional coordinate system with ***µ*** as the abscissa and ***δ*** as the ordinate. Each element in the distribution parameter set ***TX*** of the training dataset ***TD*** may also be placed in this two-dimensional coordinate system. Each element may be represented as a point $\left[{μ}_{q}^{n}, {δ}_{q}^{n}\right]$ in the two-dimensional coordinate system, where ***n*** represents an index of the sample, and ***q*** represents an index of the feature dimension. For example, ***n*** is a positive integer not greater than ***N***, and ***q*** is a positive integer not greater than ***Q***. In FIG. 10B, dots may represent elements from the distribution parameter set ***TX*** (with subscript i), and squares may represent elements from the distribution parameter set ***LX*** (with subscript j). The distance ***d*** may be represented as a Euclidean distance in the two-dimensional coordinate system between two elements (one element from the parameter set ***TX*** and the other element from the parameter set ***LX***). The distance ***d*** may be used to represent the feature distance on a certain feature dimension between two data samples (one sample from the dataset ***TD*** and the other sample from the dataset ***LD***) characterized by these two elements. As an example, the illustrated distance ${d}_{ij}^{13} \left(q\right)$ represents the feature distance between the first sample of the dataset ***LD*** and the third sample of the dataset ***TD*** for the ***q-***th feature dimension.

The distance ***d*** may be calculated for each element of the distribution parameter set ***LX*** and each element of the distribution parameter set ***TX***. The average feature distance between two samples of the local dataset ***LD*** and the training dataset ***TD*** may be determined based on the calculated set of distances ***d***, as shown in expression (3). The calculated average feature distance may be used as the weight to calculate the similarity between the local dataset ***LD*** and the training dataset ***TD***, as already described above with respect to FIG. 10A.

As already described above, when there are a plurality of training datasets ***TD***, a particular training dataset having the highest similarity with the local dataset ***LD*** may be selected from the plurality of training datasets ***TD***. Then, a particular model that has already been trained based on the particular training dataset may be selected as a matching model for the local dataset ***LD*** (or, for the client holding this dataset).

It should be understood that the calculation methods described above are merely one or more exemplary embodiments of the technology of the present disclosure. One or more steps of the above calculation methods may be modified or replaced without departing from the scope of the present disclosure.

### 6. Application Product Examples

The technology of the present disclosure can be applied to various products.

For example, the control device/base station mentioned in the present disclosure may be implemented as any type of base station, for example eNB, such as macro eNB and small eNB. A small eNB may be an eNB that covers a cell smaller than a macro cell, such as a pico eNB, a micro eNB, and a home (femto) eNB. For another example, it may be implemented as a gNB, such as a macro gNB and a small gNB. A small gNB may be a gNB covering a cell smaller than a macro cell, such as a pico gNB, a micro gNB, and a home (femto) gNB. Alternatively, the base station may be implemented as any other type of base station, such as NodeB and Base Transceiver Station (BTS). The base station may include: a main body (also referred to as a base station device) configured to control radio communication; and one or more Remote Radio Heads (RRHs) disposed at a different location from the main body. In addition, various types of terminals to be described below may each operate as a base station by performing base station functions temporarily or semi-persistently. For example, the terminal devices mentioned in the present disclosure may be implemented as mobile terminals (such as smart phones, tablet personal computers (PCs), notebook PCs, portable game terminals, portable/dongle-type mobile routers and digital cameras) or vehicle-mounted terminals (such as vehicle navigation devices) in some embodiments. The terminal device may also be implemented as a terminal performing machine-to-machine (M2M) communication (also referred to as a machine type communication (MTC) terminal). In addition, the terminal device may be a radio communication module (such as an integrated circuit module including a single wafer) mounted on each of the above terminals.

Application examples according to the present disclosure will be described below with reference to the drawings.

### [Examples of Base Stations]

It should be understood that the term base station in the present disclosure has the full breadth of its ordinary meaning, and includes at least a radio communication station used as portion of a wireless communication system or radio system to facilitate communication. Examples of the base station may be, for example but not limited to, the following: the base station may be either or both of a base transceiver station (BTS) and a base station controller (BSC) in the GSM system, and may be either or both of a radio network controller (RNC) or Node B in the WCDMA system, may be eNB in the LTE and LTE-Advanced system, or may be corresponding network nodes in future communication systems (e.g., the gNB that may appear in the 5G communication systems, eLTE eNB, etc.). Some of the functions in the base station of the present disclosure may also be implemented as an entity having a control function for communication in the scenario of a D2D, M2M, V2V and V2X communication, or as an entity that plays a spectrum coordination role in the scenario of a cognitive radio communication.

### First Example

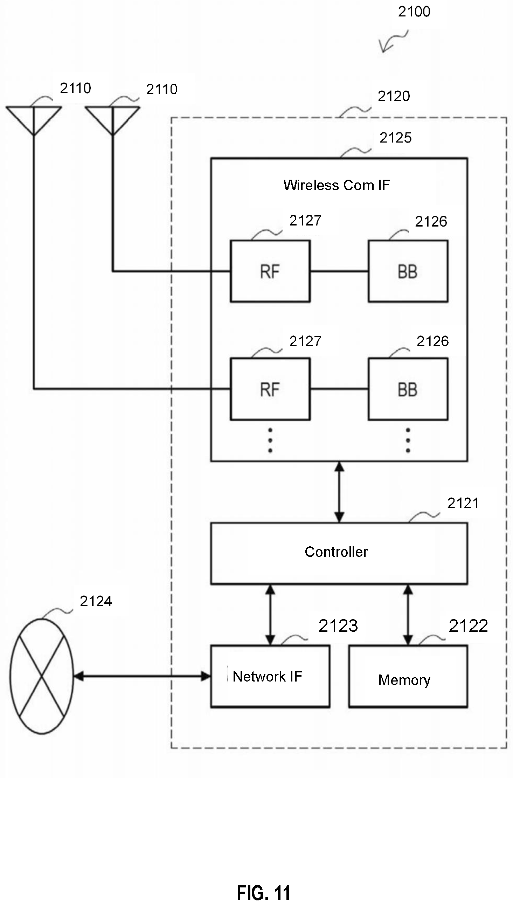

FIG. 11 is a block diagram showing a first example of an exemplary configuration of a gNB to which the technology of the present disclosure may be applied. The gNB 2100 includes multiple antennas 2110 and a base station device 2120. The base station device 2120 and each antenna 2110 may be connected to each other via an RF cable. In one implementation, the gNB 2100 (or the base station device 2120) here may correspond to the above electronic device on the control side.

Each of the antennas 2110 includes a single or multiple antenna elements (such as multiple antenna elements included in a Multiple Input Multiple Output (MIMO) antenna), and is used for the base station device 2120 to send and receive wireless signals. As shown in FIG. 11, gNB 2100 may include multiple antennas 2110. For example, multiple antennas 2110 may be compatible with multiple frequency bands used by gNB 2100.

The base station device 2120 includes a controller 2121, a memory 2122, a network interface 2123 and a wireless communication interface 2125.

The controller 2121 may be, for example, a CPU or a DSP, and operates various functions of a higher layers of the base station device 2120. For example, the controller 2121 determines location information of a target terminal device in the at least one terminal devices according to the positioning information of at least one terminal device on the terminal side in the wireless communication system and a particular location configuration information of the at least one terminal device acquired by the wireless communication interface 2125. The controller 2121 may have a logical function to perform control such as radio resource control, radio bearer control, mobility management, access control and scheduling. This control may be performed in conjunction with nearby gNBs or core network nodes. The memory 2122 includes RAM and ROM, and stores programs executed by the controller 2121 and various types of control data (such as a terminal list, transmission power data, and scheduling data).

The network interface 2123 is a communication interface for connecting the base station device 2120 to the core network 2124. The controller 2121 may communicate with the core network node or another gNB via the network interface 2123. In this case, the gNB 2100 and the core network node or other gNB may be connected to each other through logical interfaces such as S1 interface and X2 interface. The network interface 2123 may also be a wired communication interface or a wireless communication interface for wireless backhaul. If the network interface 2123 is a wireless communication interface, the network interface 2123 may use a higher frequency band for wireless communication than the frequency band used by the wireless communication interface 2125.

The wireless communication interface 2125 supports any cellular communication scheme such as Long Term Evolution (LTE) and LTE-Advanced, and provides a wireless connection to terminals located in a cell of the gNB 2100 via the antenna 2110. The wireless communication interface 2125 may generally include, for example, a baseband (BB) processor 2126 and an RF circuit 2127. The BB processor 2126 may perform, for example, encoding/decoding, modulation/demodulation, and multiplexing/demultiplexing, and perform various types of signal processing for layers (such as L1, Medium Access Control (MAC), Radio Link Control (RLC), and Packet Data Convergence Protocol (PDCP)). Instead of the controller 2121, the BB processor 2126 may have a part or all of the logic functions described above. The BB processor 2126 may be a memory storing a communication control program, or a module including a processor configured to execute a program and related circuits. The update program may cause the function of the BB processor 2126 to change. The module may be a card or a blade inserted into a slot of the base station device 2120. Alternatively, the module may also be a chip mounted on a card or blade. Meanwhile, the RF circuit 2127 may include, for example, a mixer, a filter, and an amplifier, and transmit and receive wireless signals via the antenna 2110. Although FIG. 11 illustrates an example in which one RF circuit 2127 is connected to one antenna 2110, the present disclosure is not limited to this illustration, instead one RF circuit 2127 may be connected to multiple antennas 2110 at the same time.

As shown in FIG. 11, the wireless communication interface 2125 may include multiple BB processors 2126. For example, multiple BB processors 2126 may be compatible with multiple frequency bands used by gNB 2100. As shown in FIG. 11, the wireless communication interface 2125 may include multiple RF circuits 2127. For example, the multiple RF circuits 2127 may be compatible with multiple antenna elements. Although FIG. 11 illustrates an example in which the wireless communication interface 2125 includes multiple BB processors 2126 and multiple RF circuits 2127, the wireless communication interface 2125 may also include a single BB processor 2126 or a single RF circuit 2127.

### Second Example

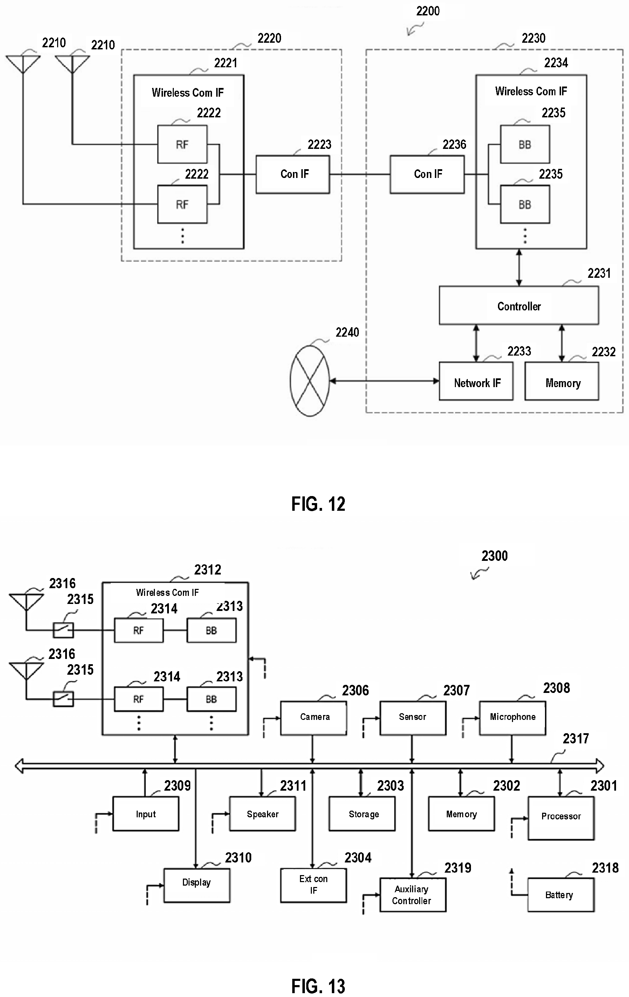

FIG. 12 is a block diagram showing a second example of an exemplary configuration of a gNB to which the technology of the present disclosure may be applied. The gNB 2200 includes multiple antennas 2210, RRH 2220 and base station device 2230. The RRH 2220 and each antenna 2210 may be connected to each other via an RF cable. The base station device 2230 and the RRH 2220 may be connected to each other via a high-speed line such as an optical fiber cable. In one implementation, the gNB 2200 (or the base station device 2230) here may correspond to the above electronic device on the control side.

Each of the antennas 2210 includes a single or multiple antenna elements (such as multiple antenna elements included in a MIMO antenna), and is used for the RRH 2220 to send and receive wireless signals. As shown in FIG. 12, the gNB 2200 may include multiple antennas 2210. For example, the multiple antennas 2210 may be compatible with multiple frequency bands used by the gNB 2200.

The base station device 2230 includes a controller 2231, a memory 2232, a network interface 2233, a wireless communication interface 2234 and a connection interface 2236. The controller 2231, the memory 2232, and the network interface 2233 are the same as the controller 2121, the memory 2122, and the network interface 2123 described with reference to FIG. 11.

The wireless communication interface 2234 supports any cellular communication scheme (such as LTE and LTE-Advanced), and provides wireless communication to terminals located in a sector corresponding to the RRH 2220 via the RRH 2220 and the antenna 2210. The wireless communication interface 2234 may generally include, for example, a BB processor 2235. The BB processor 2235 is the same as the BB processor 2126 described with reference to FIG. 11 except that the BB processor 2235 is connected to the RF circuit 2222 of the RRH 2220 via the connection interface 2236. As shown in FIG. 12, the wireless communication interface 2234 may include multiple BB processors 2235. For example, the multiple BB processors 2235 may be compatible with multiple frequency bands used by the gNB 2200. Although FIG. 12 illustrates an example in which the wireless communication interface 2234 includes multiple BB processors 2235, the wireless communication interface 2234 may also include a single BB processor 2235.

The connection interface 2236 is an interface for connecting the base station device 2230 (wireless communication interface 2234) to the RRH 2220. The connection interface 2236 may also be a communication module for communication in the above high-speed line connecting the base station device 2230 (wireless communication interface 2234) to the RRH 2220.

The RRH 2220 includes a connection interface 2223 and a wireless communication interface 2221.

The connection interface 2223 is an interface for connecting the RRH 2220 (wireless communication interface 2221) to the base station device 2230. The connection interface 2223 may also be a communication module used for communication in the above high-speed line.

The wireless communication interface 2221 transmits and receives wireless signals via the antenna 2210. Wireless communication interface 2221 may generally include RF circuitry 2222, for example. The RF circuit 2222 may include, for example, a mixer, a filter, and an amplifier, and transmits and receives wireless signals via the antenna 2210. Although FIG. 12 shows an example in which one RF circuit 2222 is connected to one antenna 2210, the present disclosure is not limited to this illustration, instead one RF circuit 2222 may be connected to multiple antennas 2210 at the same time.

As shown in FIG. 12, the wireless communication interface 2221 may include multiple RF circuits 2222. For example, the multiple RF circuits 2222 may support multiple antenna elements. Although FIG. 12 illustrates an example in which the wireless communication interface 2221 includes multiple RF circuits 2222, the wireless communication interface 2221 may also include a single RF circuit 2222.

### [Examples of User Devices/Terminal Devices]

### First Example

FIG. 13 is a block diagram showing an example of an exemplary configuration of a communication device 2300 (e.g., a smart phone, a communicator, etc.) to which the techniques of the present disclosure may be applied. The communication device 2300 includes a processor 2301, a memory 2302, a storage apparatus 2303, an external connection interface 2304, a camera apparatus 2306, a sensor 2307, a microphone 2308, an input apparatus 2309, a display apparatus 2310, a speaker 2311, a wireless communication interface 2312, one or more antenna switches 2315, one or more antennas 2316, a bus 2317, a battery 2318, and an auxiliary controller 2319. In one implementation, the communication device 2300 (or the processor 2301) here may correspond to the above transmitting device or electronic device on the terminal side.

The processor 2301 may be, for example, a CPU or a system on chip (SoC), and controls functions of an application layer and other layers of the communication device 2300. The memory 2302 includes RAM and ROM, and stores data and programs executed by the processor 2301. The storage apparatus 2303 may include a storage medium such as a semiconductor memory and a hard disk. The external connection interface 2304 is an interface for connecting an external apparatus (such as a memory card and a universal serial bus (USB) apparatus) to the communication device 2300.

The camera apparatus 2306 includes an image sensor (such as a charge coupled device (CCD) and a complementary metal oxide semiconductor (CMOS)), and generates a captured image. Sensors 2307 may include a set of sensors such as measurement sensors, gyro sensors, geomagnetic sensors, and acceleration sensors. The microphone 2308 converts sound input to the communication device 2300 into an audio signal. The input apparatus 2309 includes, for example, a touch sensor configured to detect a touch on the screen of the display apparatus 2310, a keypad, a keyboard, buttons, or switches, and receives operations or information input from a user. The display apparatus 2310 includes a screen (such as a Liquid Crystal Display (LCD) and an Organic Light Emitting Diode (OLED) display), and displays an image output by the communication device 2300. The speaker 2311 converts an audio signal output from the communication device 2300 into sound.

The wireless communication interface 2312 supports any cellular communication scheme (such as LTE and LTE-Advanced), and performs wireless communication. The wireless communication interface 2312 may generally include, for example, a BB processor 2313 and an RF circuit 2314. The BB processor 2313 may perform, for example, encoding/decoding, modulation/demodulation, and multiplexing/demultiplexing, and perform various types of signal processing for wireless communication. Meanwhile, the RF circuit 2314 may include, for example, a mixer, a filter, and an amplifier, and transmit and receive wireless signals via the antenna 2316. The wireless communication interface 2312 may be a chip module on which a BB processor 2313 and an RF circuit 2314 are integrated. As shown in FIG. 13, the wireless communication interface 2312 may include multiple BB processors 2313 and multiple RF circuits 2314. Although FIG. 13 shows an example in which the wireless communication interface 2312 includes multiple BB processors 2313 and multiple RF circuits 2314, the wireless communication interface 2312 may also include a single BB processor 2313 or a single RF circuit 2314.

In addition, the wireless communication interface 2312 may support another type of wireless communication scheme, such as a short-range wireless communication scheme, a near field communication scheme, and a wireless local area network (LAN) scheme, in addition to the cellular communication scheme. In this case, the wireless communication interface 2312 may include a BB processor 2313 and an RF circuit 2314 for each wireless communication scheme.

Each of the antenna switches 2315 switches the connection destination of the antenna 2316 among multiple circuits included in the wireless communication interface 2312 (e.g., circuits for different wireless communication schemes).

Each of the antennas 2316 includes a single or multiple antenna elements (such as multiple antenna elements included in a MIMO antenna), and is used for the wireless communication interface 2312 to transmit and receive wireless signals. As shown in FIG. 13, the communication device 2300 may include multiple antennas 2316. Although FIG. 13 illustrates an example in which the communication device 2300 includes multiple antennas 2316, the communication device 2300 may also include a single antenna 2316.

In addition, the communication device 2300 may include an antenna 2316 for each wireless communication scheme. In this case, the antenna switch 2315 may be omitted from the configuration of the communication device 2300.

The bus 2317 connects the processor 2301, memory 2302, storage apparatus 2303, external connection interface 2304, camera apparatus 2306, sensor 2307, microphone 2308, input apparatus 2309, display apparatus 2310, speaker 2311, wireless communication interface 2312, and auxiliary controller 2319 to each other. The battery 2318 provides power to the various blocks of the communication device 2300 shown in FIG. 13 via feed lines, which are partially shown as dashed lines in the figure. The auxiliary controller 2319 operates the minimum necessary functions of the communication device 2300 in sleep mode, for example.

### Second Example

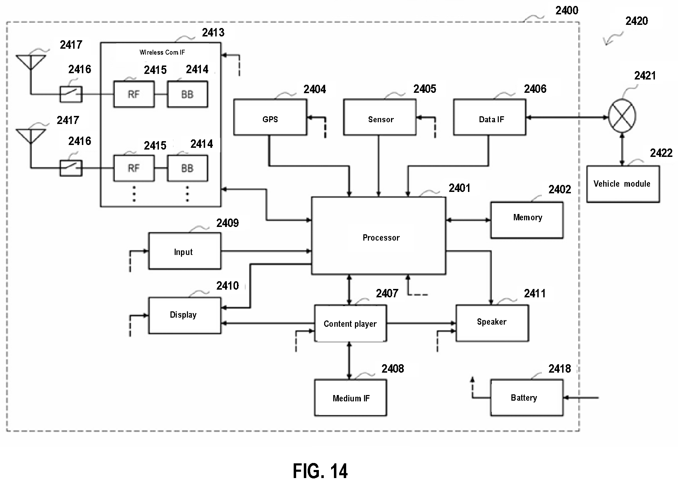

FIG. 14 is a block diagram showing an example of an exemplary configuration of a vehicle navigation device 2400 to which the technology of the present disclosure may be applied. The vehicle navigation device 2400 includes a processor 2401, a memory 2402, a global positioning system (GPS) module 2404, a sensor 2405, a data interface 2406, a content player 2407, a storage medium interface 2408, an input apparatus 2409, a display apparatus 2510, a speaker 2411, a wireless communication interface 2413, one or more antenna switches 2416, one or more antennas 2417, and a battery 2418. In one implementation, the vehicle navigation device 2400 (or the processor 2401) here may correspond to a transmitting device or a terminal-side electronic device.

The processor 2401 may be, for example, a CPU or a SoC, and controls the navigation function and other functions of the vehicle navigation device 2400. The memory 2402 includes RAM and ROM, and stores data and programs executed by the processor 2401.

The GPS module 2404 measures the location (such as latitude, longitude, and altitude) of the vehicle navigation device 2400 using GPS signals received from GPS satellites. The sensors 2405 may include a set of sensors such as gyroscopic sensors, geomagnetic sensors, and air pressure sensors. The data interface 2406 is connected to, for example, the in-vehicle network 2421 via a terminal not shown, and acquires data generated by the vehicle (such as vehicle speed data).

The content player 2407 reproduces content stored in a storage medium (such as CD and DVD), which is inserted into the storage medium interface 2408. The input apparatus 2409 includes, for example, a touch sensor configured to detect a touch on the screen of the display apparatus 2510, a button, or a switch, and receives an operation or information input from a user. The display apparatus 2510 includes a screen such as an LCD or OLED display, and displays an image of a navigation function or reproduced content. The speaker 2411 outputs sound of a navigation function or reproduced content.

The wireless communication interface 2413 supports any cellular communication scheme such as LTE and LTE-Advanced, and performs wireless communication. The wireless communication interface 2413 may generally include, for example, a BB processor 2414 and an RF circuit 2415. The BB processor 2414 may perform, for example, encoding/decoding, modulation/demodulation, and multiplexing/demultiplexing, and perform various types of signal processing for wireless communication. Meanwhile, the RF circuit 2415 may include, for example, a mixer, a filter, and an amplifier, and transmit and receive wireless signals via the antenna 2417. The wireless communication interface 2413 may also be a chip module on which the BB processor 2414 and the RF circuit 2415 are integrated. As shown in FIG. 14, the wireless communication interface 2413 may include multiple BB processors 2414 and multiple RF circuits 2415. Although FIG. 14 illustrates an example in which the wireless communication interface 2413 includes multiple BB processors 2414 and multiple RF circuits 2415, the wireless communication interface 2413 may also include a single BB processor 2414 or a single RF circuit 2415.

In addition, the wireless communication interface 2413 may support another type of wireless communication scheme, such as a short-distance wireless communication scheme, a near field communication scheme, and a wireless LAN scheme, in addition to the cellular communication scheme. In this case, the wireless communication interface 2413 may include a BB processor 2414 and an RF circuit 2415 for each wireless communication scheme.

Each of the antenna switches 2416 switches the connection destination of the antenna 2417 among multiple circuits included in the wireless communication interface 2413 (such as circuits for different wireless communication schemes).

Each of the antennas 2417 includes a single or multiple antenna elements (such as multiple antenna elements included in a MIMO antenna), and is used for the wireless communication interface 2413 to transmit and receive wireless signals. As shown in FIG. 14, the vehicle navigation device 2400 may include multiple antennas 2417. Although FIG. 14 illustrates an example in which the vehicle navigation device 2400 includes multiple antennas 2417, the vehicle navigation device 2400 may also include a single antenna 2417.

In addition, the vehicle navigation device 2400 may include an antenna 2417 for each wireless communication scheme. In this case, the antenna switch 2416 may be omitted from the configuration of the vehicle navigation device 2400.

The battery 2418 provides power to various blocks of the vehicle navigation device 2400 shown in FIG. 14 via feeder lines, which are partially shown as dotted lines in the figure. The battery 2418 accumulates electric power supplied from the vehicle.

The technology of the present disclosure may also be implemented as an in-vehicle system (or vehicle) 2420 including one or more blocks in a vehicle navigation device 2400, an in-vehicle network 2421, and a vehicle module 2422. The vehicle module 2422 generates vehicle data (such as vehicle speed, engine speed, and breakdown information), and outputs the generated data to the in-vehicle network 2421.

The exemplary embodiments of the present disclosure are described above with reference to the accompanying drawings, but the present disclosure is of course not limited to the above examples. A person skilled in the art may find various alterations and modifications within the scope of the appended claims, and it should be understood that they will naturally come under the technical scope of the present disclosure.

It should be understood that the machine-readable storage medium or the machine-executable instructions in the program product according to the embodiments of the present disclosure may be configured to perform operations corresponding to the above device and method embodiments. When referring to the above device and method embodiments, the embodiments of the machine-readable storage medium or the program product will be obvious to those skilled in the art, so the description will not be repeated. Machine-readable storage media and program products for carrying or including the above machine-executable instructions also fall within the scope of the present disclosure. Such storage media may include, but are not limited to, floppy disks, optical disks, magneto-optical disks, memory cards, memory sticks, and the like.

In addition, it should be understood that the series of processes and devices described above may also be implemented by software and/or firmware. In the case of implemented by software and/or firmware, respective programs constituting the respective software are stored in the storage medium of the related device, and various functions may be performed when the programs are executed.

For example, multiple functions included in one unit in the above embodiments may be implemented by separate apparatus. Alternatively, multiple functions implemented by multiple units in the above embodiments may be respectively implemented by separate apparatus. In addition, one of the above functions may be realized by multiple units. Needless to say, such a configuration is included in the technical scope of the present disclosure.

In this specification, the steps described in the flowcharts include not only processing performed in time series in the stated order but also processing performed in parallel or individually and not necessarily in time series. Furthermore, even in the steps processed in time series, needless to say, the order may be appropriately changed.

### 7. Example Embodiments of the Present Disclosure

1. An electronic device, comprising: at least one processing unit; and at least one storage unit comprising computer program code, which, when executed by the at least one processing unit, causes the electronic device to perform operations of: obtaining a local distribution parameter set of a second device, the local distribution parameter set characterizing data distribution characteristics of a local dataset of the second device; and sending a trained particular model to the second device, wherein the particular model is determined based at least in part on the local distribution parameter set.
2. The electronic device of claim 1, wherein the operations further comprise: sending the local distribution parameter set together with a client identifier of the second device; and receiving a model list, the model list comprising the particular model.
3. The electronic device of Embodiment 1, wherein the electronic device is configured as a server implementing a federated learning process, and the second device is configured as one of a plurality of clients implementing the federated learning process.
4. The electronic device of Embodiment 3, wherein the operations further comprise: sending the local distribution parameter set together with a task identifier, the task identifier identifying a particular training task that is associated with the second device in the federated learning process; and receiving the particular model, wherein the particular model is determined based at least in part on the task identifier.
5. The electronic device of Embodiment 3, wherein the operations further comprise: receiving a trained local model from the second device, the local model being trained by the second device based on a complemented local dataset, wherein the complemented local dataset is generated by the particular model based on at least a portion of the local dataset; and generating a global model based at least in part on aggregation of the local model.
6. The electronic device of Embodiment 1, wherein the electronic device is configured to implement an Application Function (AF) of a cellular network, and the operations further comprise: if the AF is not trusted, sending the local distribution parameter set to a Network Data Analytics Function (NWDAF) of the cellular network via a Network Exposure Function (NEF) of the cellular network; and if the AF is trusted, sending the local distribution parameter set directly to the NWDAF.
7. The electronic device of Embodiment 1, wherein the particular model is selected from one or more candidate models, and a particular training dataset used for training the particular model has the highest similarity with the local dataset of the second device among one or more training datasets used for training the one or more candidate models.
8. The electronic device of Embodiment 7, wherein the similarity is determined based at least in part on: (1) the local distribution parameter set of the local dataset, and (2) a particular distribution parameter set of the particular training dataset.
9. The electronic device of Embodiment 1, wherein the operations further comprise: sending one or more encoder models to the second device, the one or more encoder models being configured to determine one or more characteristics associated with the second device; receiving the determined one or more characteristics from the second device; and performing one or more tasks based on the one or more characteristics.
10. The electronic device of Embodiment 9, wherein the one or more encoder models comprise at least one of: a dataset encoder model configured to determine the data distribution characteristics based on the local dataset of the second device; a preference encoder model configured to determine a preference associated with the second device; and an intent encoder model configured to determine an intent associated with the second device.
11. The electronic device of Embodiment 9, wherein the operations further comprise: retrieving the one or more encoder models from an Analytics Data Repository Function (ADRF) in a cellular network.
12. The electronic device of Embodiment 1, wherein the operations further comprise: sending to the second device a configuration associated with a transmission mode of the second device, the transmission mode comprising one of: a first mode associated with enabling an artificial intelligence model; or a second mode associated with not enabling an artificial intelligence model.
13. The electronic device of Embodiment 12, wherein the configuration associated with the first mode further specifies: a transmission timing of the second device when enabling an artificial intelligence model; or parameters of one or more artificial intelligence models used by the second device.
14. An electronic device, comprising: at least one processing unit; and at least one storage unit comprising computer program code, wherein the computer program code, when executed by the at least one processing unit, causes the electronic device to perform operations of: sending a local distribution parameter set to a first device, the local distribution parameter set characterizing data distribution characteristics of a local dataset of the electronic device; and receiving a trained particular model from the first device, wherein the particular model is determined based at least in part on the local distribution parameter set.
15. The electronic device of Embodiment 14, wherein the operations further comprise: generating an output data portion based on at least a portion of the local dataset using the received particular model.
16. The electronic device of Embodiment 15, wherein the output data portion comprises a label, a prediction, and/or a decision generated based on the at least a portion of the local dataset.
17. The electronic device of Embodiment 15, wherein the operations further comprise: complementing the local dataset using the output data portion; training a local model of the electronic device using the complemented local dataset as a training dataset; and sending the trained local model to the first device for aggregation to generate a global model for a federated learning process.
18. The electronic device of Embodiment 17, wherein the operations further comprise: avoiding participating in the federated learning process, during the complementing of the local dataset.
19. The electronic device of Embodiment 17, wherein the operations further comprise: avoiding training the local model using the at least a portion of the local dataset that is uncomplemented, during the complementing of the local dataset.
20. The electronic device of Embodiment 14, wherein the particular model is selected from one or more candidate models, and a particular training dataset used for training the particular model has the highest similarity with the local dataset of the second device among one or more training datasets used for training the one or more candidate models.
21. The electronic device of Embodiment 20, wherein the similarity is determined based at least in part on: (1) the local distribution parameter set of the local dataset, and (2) a particular distribution parameter set of the particular training dataset.
22. The electronic device of Embodiment 14, wherein the operations further comprise: receiving one or more encoder models; running the one or more encoder models to determine one or more characteristics associated with the electronic device; and sending the determined one or more characteristics to the first device.
23. The electronic device of Embodiment 22, wherein the one or more encoder models comprise at least one of: a dataset encoder model configured to determine the data distribution characteristics based on the local dataset of the electronic device; a preference encoder model configured to determine a preference associated with the electronic device; and an intent encoder model configured to determine an intent associated with the electronic device.
24. The electronic device of Embodiment 22, wherein the one or more encoder models are maintained at an Analytics Data Repository Function (ADRF) in a cellular network.
25. The electronic device of Embodiment 14, wherein the operations further comprise: receiving a configuration associated with a transmission mode of the electronic device, the transmission mode comprising one of: a first mode associated with enabling an artificial intelligence model; or a second mode associated with not enabling an artificial intelligence model.
26. The electronic device of Embodiment 25, wherein the configuration associated with the first mode further specifies: a transmission timing of the electronic device when enabling an artificial intelligence model; or parameters of one or more artificial intelligence models used by the electronic device.
27. An electronic device, comprising: at least one processing unit; and at least one storage unit comprising computer program code, wherein the computer program code, when executed by the at least one processing unit, causes the electronic device to perform operations of: receiving one or more local distribution parameter sets, each of which characterizing data distribution characteristics of a local dataset of a respective client of one or more clients; sending, to a model repository, a task identifier that identifies a training task associated with the one or more clients; receiving, from the model repository, one or more trained candidate models corresponding to the task identifier; and sending a model list comprising a respective matching model selected from the one or more candidate models for each of the one or more clients, the matching model being determined based at least in part on a respective local distribution parameter set in the one or more local distribution parameter sets.
28. The electronic device of Embodiment 27, wherein the operations further comprise: for each client of the one or more clients: determining, from one or more training datasets a particular training dataset that has the highest similarity with a local dataset of the client; and determining, from the one or more candidate models, a candidate model that corresponds to the particular training dataset, as the matching model for the client.
29. The electronic device of Embodiment 28, wherein the similarity between the local dataset of the client and the particular training dataset is determined based at least in part on: (1) a local distribution parameter set of the local dataset, and (2) a particular distribution parameter set of the particular training dataset.
30. The electronic device of Embodiment 29, wherein: the particular distribution parameter set is received from the model repository; or the particular distribution parameter set is determined based on the particular training dataset in the one or more training datasets received from the model repository.
31. The electronic device of Embodiment 27, wherein the electronic device is configured to implement a Network Data Analytics Function (NWDAF) in a cellular network, and the model repository resides at an Analytics Data Repository Function (ADRF) in the cellular network.
32. The electronic device of Embodiment 27, wherein the one or more local distribution parameter sets and the task identifier are received from a server for machine learning.
33. The electronic device of Embodiment 32, wherein receiving the one or more distribution parameter sets and the task identifier comprises: receiving the one or more distribution parameter sets and the task identifier directly from the server; or receiving the one or more distribution parameter sets and the task identifier from the server via a Network Exposure Function (NEF) of a cellular network.
34. The electronic device of Embodiment 27, wherein sending a model list comprises: sending, to the server, the matching model for each client of the one or more clients together with a client identifier of the client.
35. The electronic device of Embodiment 28, wherein each local distribution parameter set in the one or more local distribution parameter sets comprises at least one of: a mean and a standard deviation for a Gaussian distribution; a shape parameter and an inverse scale parameter for a Gamma distribution; or a mean and a variance for a Log-normal distribution.
36. A method, comprising steps of: obtaining a local distribution parameter set of a second device, the local distribution parameter set characterizing data distribution characteristics of a local dataset of the second device; and sending a trained particular model to the second device, wherein the particular model is determined based at least in part on the local distribution parameter set.
37. A method, comprising steps of: sending a local distribution parameter set to a first device, the local distribution parameter set characterizing data distribution characteristics of a local dataset of an electronic device; and receiving a trained particular model from the first device, wherein the particular model is determined based at least in part on the local distribution parameter set.
38. A method, comprising steps of: receiving one or more local distribution parameter sets, each of which characterizing data distribution characteristics of a local dataset of a respective client of one or more clients; sending, to a model repository, a task identifier that identifies a training task associated with the one or more clients; receiving, from the model repository, one or more trained candidate models corresponding to the task identifier; and sending a model list comprising a respective matching model selected from the one or more candidate models for each of the one or more clients, the matching model being determined based at least in part on a respective local distribution parameter set in the one or more local distribution parameter sets.
39. A computer-readable storage medium having one or more instructions stored thereon, the one or more instructions, when executed by one or more processing circuits of an electronic device, causing the electronic device to perform the method of any one of Embodiments 36-38.
40. A computer program product comprising a computer program, the computer program, when executed by a processor, executing the method of any one of Embodiments 36-38.
41.An apparatus comprising means for performing the method of any one of Embodiments 36-38.

## Claims

1. An electronic device, comprising:
at least one processing unit; and
at least one storage unit comprising computer program code, which, when executed by the at least one processing unit, causes the electronic device to perform operations of:
obtaining a local distribution parameter set of a second device, the local distribution parameter set characterizing data distribution characteristics of a local dataset of the second device; and
sending a trained particular model to the second device, wherein the particular model is determined based at least in part on the local distribution parameter set.

2. The electronic device of claim 1, wherein the operations further comprise:
sending the local distribution parameter set together with a client identifier of the second device; and
receiving a model list, the model list comprising the particular model.

3. The electronic device of claim 1, wherein the electronic device is configured as a server implementing a federated learning process, and the second device is configured as one of a plurality of clients implementing the federated learning process.

4. The electronic device of claim 3, wherein the operations further comprise:
sending the local distribution parameter set together with a task identifier, the task identifier identifying a particular training task that is associated with the second device in the federated learning process; and
receiving the particular model, wherein the particular model is determined based at least in part on the task identifier.

5. The electronic device of claim 3, wherein the operations further comprise:
receiving a trained local model from the second device, the local model being trained by the second device based on a complemented local dataset, wherein the complemented local dataset is generated by the particular model based on at least a portion of the local dataset; and
generating a global model based at least in part on aggregation of the local model.

6. The electronic device of claim 1, wherein the electronic device is configured to implement an Application Function (AF) of a cellular network, and the operations further comprise:
if the AF is not trusted, sending the local distribution parameter set to a Network Data Analytics Function (NWDAF) of the cellular network via a Network Exposure Function (NEF) of the cellular network; and
if the AF is trusted, sending the local distribution parameter set directly to the NWDAF.

7. The electronic device of claim 1, wherein the particular model is selected from one or more candidate models, and a particular training dataset used for training the particular model has the highest similarity with the local dataset of the second device among one or more training datasets used for training the one or more candidate models.

8. The electronic device of claim 7, wherein the similarity is determined based at least in part on: (1) the local distribution parameter set of the local dataset, and (2) a particular distribution parameter set of the particular training dataset.

9. The electronic device of claim 1, wherein the operations further comprise:
sending one or more encoder models to the second device, the one or more encoder models being configured to determine one or more characteristics associated with the second device;
receiving the determined one or more characteristics from the second device; and
performing one or more tasks based on the one or more characteristics.

10. The electronic device of claim 9, wherein the one or more encoder models comprise at least one of:
a dataset encoder model configured to determine the data distribution characteristics based on the local dataset of the second device;
a preference encoder model configured to determine a preference associated with the second device; and
an intent encoder model configured to determine an intent associated with the second device.

11. The electronic device of claim 9, wherein the operations further comprise:
retrieving the one or more encoder models from an Analytics Data Repository Function (ADRF) in a cellular network.

12. The electronic device of claim 1, wherein the operations further comprise: sending to the second device a configuration associated with a transmission mode of the second device, the transmission mode comprising one of:
a first mode associated with enabling an artificial intelligence model; or
a second mode associated with not enabling an artificial intelligence model.

13. The electronic device of claim 12, wherein the configuration associated with the first mode further specifies:
a transmission timing of the second device when enabling an artificial intelligence model; or
parameters of one or more artificial intelligence models used by the second device.

14. An electronic device, comprising:
at least one processing unit; and
at least one storage unit comprising computer program code, wherein the computer program code, when executed by the at least one processing unit, causes the electronic device to perform operations of:
sending a local distribution parameter set to a first device, the local distribution parameter set characterizing data distribution characteristics of a local dataset of the electronic device; and
receiving a trained particular model from the first device, wherein the particular model is determined based at least in part on the local distribution parameter set.

15. The electronic device of claim 14, wherein the operations further comprise:
generating an output data portion based on at least a portion of the local dataset using the received particular model.

16. The electronic device of claim 15, wherein the output data portion comprises a label, a prediction, and/or a decision generated based on the at least a portion of the local dataset.

17. The electronic device of claim 15, wherein the operations further comprise:
complementing the local dataset using the output data portion;
training a local model of the electronic device using the complemented local dataset as a training dataset; and
sending the trained local model to the first device for aggregation to generate a global model for a federated learning process.

18. The electronic device of claim 17, wherein the operations further comprise:
avoiding participating in the federated learning process, during the complementing of the local dataset.

19. The electronic device of claim 17, wherein the operations further comprise:
avoiding training the local model using the at least a portion of the local dataset that is uncomplemented, during the complementing of the local dataset.

20. The electronic device of claim 14, wherein the particular model is selected from one or more candidate models, and a particular training dataset used for training the particular model has the highest similarity with the local dataset of the second device among one or more training datasets used for training the one or more candidate models.

21. The electronic device of claim 20, wherein the similarity is determined based at least in part on:
(1) the local distribution parameter set of the local dataset, and
(2) a particular distribution parameter set of the particular training dataset.

22. The electronic device of claim 14, wherein the operations further comprise:
receiving one or more encoder models;
running the one or more encoder models to determine one or more characteristics associated with the electronic device; and
sending the determined one or more characteristics to the first device.

23. The electronic device of claim 22, wherein the one or more encoder models comprise at least one of:
a dataset encoder model configured to determine the data distribution characteristics based on the local dataset of the electronic device;
a preference encoder model configured to determine a preference associated with the electronic device; and
an intent encoder model configured to determine an intent associated with the electronic device.

24. The electronic device of claim 22, wherein the one or more encoder models are maintained at an Analytics Data Repository Function (ADRF) in a cellular network.

25. The electronic device of claim 14, wherein the operations further comprise:
receiving a configuration associated with a transmission mode of the electronic device, the transmission mode comprising one of:
a first mode associated with enabling an artificial intelligence model; or
a second mode associated with not enabling an artificial intelligence model.

26. The electronic device of claim 25, wherein the configuration associated with the first mode further specifies:
a transmission timing of the electronic device when enabling an artificial intelligence model; or
parameters of one or more artificial intelligence models used by the electronic device.

27. An electronic device, comprising:
at least one processing unit; and
at least one storage unit comprising computer program code, wherein the computer program code, when executed by the at least one processing unit, causes the electronic device to perform operations of:
receiving one or more local distribution parameter sets, each of which characterizing data distribution characteristics of a local dataset of a respective client of one or more clients;
sending, to a model repository, a task identifier that identifies a training task associated with the one or more clients;
receiving, from the model repository, one or more trained candidate models corresponding to the task identifier; and
sending a model list comprising a respective matching model selected from the one or more candidate models for each of the one or more clients, the matching model being determined based at least in part on a respective local distribution parameter set in the one or more local distribution parameter sets.

28. The electronic device of claim 27, wherein the operations further comprise:
for each client of the one or more clients:
determining, from one or more training datasets a particular training dataset that has the highest similarity with a local dataset of the client; and
determining, from the one or more candidate models, a candidate model that corresponds to the particular training dataset, as the matching model for the client.

29. The electronic device of claim 28, wherein the similarity between the local dataset of the client and the particular training dataset is determined based at least in part on: (1) a local distribution parameter set of the local dataset, and (2) a particular distribution parameter set of the particular training dataset.

30. The electronic device of claim 29, wherein:
the particular distribution parameter set is received from the model repository; or
the particular distribution parameter set is determined based on the particular training dataset in the one or more training datasets received from the model repository.

31. The electronic device of claim 27, wherein the electronic device is configured to implement a Network Data Analytics Function (NWDAF) in a cellular network, and the model repository resides at an Analytics Data Repository Function (ADRF) in the cellular network.

32. The electronic device of claim 27, wherein the one or more local distribution parameter sets and the task identifier are received from a server for machine learning.

33. The electronic device of claim 32, wherein receiving the one or more distribution parameter sets and the task identifier comprises:
receiving the one or more distribution parameter sets and the task identifier directly from the server; or
receiving the one or more distribution parameter sets and the task identifier from the server via a Network Exposure Function (NEF) of a cellular network.

34. The electronic device of claim 27, wherein sending a model list comprises:
sending, to the server, the matching model for each client of the one or more clients together with a client identifier of the client.

35. The electronic device of claim 28, wherein each local distribution parameter set in the one or more local distribution parameter sets comprises at least one of:
a mean and a standard deviation for a Gaussian distribution;
a shape parameter and an inverse scale parameter for a Gamma distribution; or
a mean and a variance for a Log-normal distribution.

36. A method, comprising steps of:
obtaining a local distribution parameter set of a second device, the local distribution parameter set characterizing data distribution characteristics of a local dataset of the second device; and
sending a trained particular model to the second device, wherein the particular model is determined based at least in part on the local distribution parameter set.

37. A method, comprising steps of:
sending a local distribution parameter set to a first device, the local distribution parameter set characterizing data distribution characteristics of a local dataset of an electronic device; and
receiving a trained particular model from the first device, wherein the particular model is determined based at least in part on the local distribution parameter set.

38. A method, comprising steps of:
receiving one or more local distribution parameter sets, each of which characterizing data distribution characteristics of a local dataset of a respective client of one or more clients;
sending, to a model repository, a task identifier that identifies a training task associated with the one or more clients;
receiving, from the model repository, one or more trained candidate models corresponding to the task identifier; and
sending a model list comprising a respective matching model selected from the one or more candidate models for each of the one or more clients, the matching model being determined based at least in part on a respective local distribution parameter set in the one or more local distribution parameter sets.

39. A computer-readable storage medium having one or more instructions stored thereon, the one or more instructions, when executed by one or more processing circuits of an electronic device, causing the electronic device to perform the method of any one of claims 36-38.

40. A computer program product comprising a computer program, the computer program, when executed by a processor, executing the method of any one of claims 36-38.

41. An apparatus comprising means for performing the method of any one of claims 36-38.
